Europäisches Patentamt

European Patent Office

Office européen des brevets

(19)

(11) EP 0 881 783 A1

(12) EUROPÄISCHE PATENTANMELDUNG

(43) Veröffentlichungstag:
02.12.1998 Patentblatt 1998/49

(51) Int Cl.⁶: H04B 7/08, H04L 1/06,
G10L 7/02

(21) Anmeldenummer: 98810468.3

(22) Anmeldetag: 20.05.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 26.05.1997 CH 1236/97

(71) Anmelder: Siemens Schweiz AG
8047 Zürich (CH)

(72) Erfinder:
• Marcoli, Sandro
8055 Zürich (CH)
• Hofbauer, Markus
8008 Zürich (CH)

(54) **Verfahren zur Selektion eines optimalen Ubertragungskanals**

(57)    Das Selektionsverfahren ist für Übertragungs-systeme vorgesehen, bei denen die Übertragung eines Signals von einer Nachrichtenquelle zu einer Nachrichtensenke meist über verschiedene Übertragungskanäle erfolgt, wobei das Signal von der Nachrichtenquelle per Funk über geographisch voneinander getrennte Antennen (A1, A2, ...) zu mehreren Empfängern (R1, R2, ...) gelangt und von dort zu einer Zentrale (Z) übertragen wird, durch die das qualitativ beste Signale ausgewählt und zu einem Operator durchgeschaltet wird. Dabei wird in den Empfängern (R1, R2, ...) ein Qualitätsindex gebildet, der zusammen mit dem dazu korrespondierenden Signal zur Zentrale Z übertragen wird, wonach in der Zentrale Z das Signal mit dem höchsten Qualitätsindex selektiert wird. In den Empfängern (R1, R2, ...) wird die Signalleistung $p[k]$, die Sprachleistung $s[k]$ sowie die Rauschleistung $n[k]$ und somit das Verhältnis von Sprach- zu Rauschleistung SNR $[k]$ bestimmt, das gegebenenfalls geglättet als Mass für die Qualität des zugehörigen Signals verwendet wird. Vorzugsweise wird bei der Berechnung der Signalqualität auch der Articulation Index berücksichtigt. In den Empfängern (R1, R2, ...) wird ferner der Zustand des empfangenen Signals geprüft und festgestellt, ob Rauschen oder Sprache vorliegt. Der Zustand "Rauschen" wird der Zentrale (Z) gemeldet, so dass eine Umschaltung auf das selektierte Signal jeweils während diesem Zustand erfolgen kann, wodurch Umschaltstörungen weitgehend vermieden werden.

Fig. 1

**Beschreibung**

Die vorliegende Erfindung betrifft ein Verfahren und eine Vorrichtung nach dem Oberbegriff des Patentanspruchs 1 bzw. 13.

Bei verschiedenen Übertragungssystemen erfolgt die Übertragung eines Signals von einer Nachrichtenquelle zu einer Nachrichtensenke über verschiedene Übertragungsstrecken bzw. -kanäle. Im Empfänger ist der Kanal, über den die qualitativ besten Signale übertragen werden, auszuwählen. Die Auswahl hat normalerweise innerhalb von wenigen Sekundenbruchteilen mit geringem Aufwand zu erfolgen, so dass bekannte subjektive Prüfmethoden (mean opinion score, diagnostic rhyme test, etc.), bei denen die Natürlichkeit sowie die Verständlichkeit der Sprachsignale ermittelt wird, nicht anwendbar sind (vgl. R. C. Dorf, The Electrical Engineering Handbook, CRC Press, Boca Raton 1993, Seite 280 und Seite 287).

In D. Lochmann, Digitale Nachrichtentechnik, Verlag Technik GmbH, Berlin 1995 wird in Kapitel 1.6.2 zwischen subjektiven und objektiven Gütekriterien der Fernsprechübertragung unterschieden. Subjektive Kriterien sind die Verständlichkeit (intelligibility) und die Natürlichkeit (quality) der Sprache. In Bild 1.41 (Seite 66) ist gezeigt, welche Frequenzbereiche der Sprache wesentlich zur Silbenverständlichkeit beitragen. Die Sprachanteile im Frequenzbereich zwischen 300 Hz und 3'400 Hz ergeben eine Silbenverständlichkeit von rund 77%, wodurch eine Satzverständlichkeit von über 95% erzielt wird.

Objektive Gütekriterien beziehen sich auf den Einfluss von Störungen im Übertragungskanal. Im Gegensatz zu Phasenverzerrungen sind auftretende Dämpfungsverzerrungen und insbesondere der Störabstand von Bedeutung.

Aus der EP 0 288 904 A2 ist ein mikrozellulares Kommunikationssystem bekannt bei dem eine mobile Station, die sich innerhalb einer Zelle befindet, durch eine Qualitätsmessung feststellt, über welche Antenne das beste Signal von der Zentrale dieser Zelle empfangen wird. Ferner wird in der Zentrale durch eine Messung der Qualität des Signals festgestellt, ob die mobile Station zur Verwaltung an die Zentrale einer benachbarten Zelle übergeben werden sollte. Die Qualitätsmessung bezieht sich dabei nicht auf die Natürlichkeit der Sprache, sondern auf das Verhältnis von Signal- zu Rauschleistung (signal to noise ratio / nachstehend nur noch mit SNR bezeichnet).

Eine ähnliche Problemstellung ergibt sich bei Kommunikationssystemen für den Flugfunk, wie sie aus der EP 0 676 906 A1 bekannt sind. Von der mobilen Station in einem Flugzeug wird das Sprachsignal des Piloten meist über mehrere geographisch getrennte Empfänger in unterschiedlicher Qualität an ein Kontrollzentrum übertragen, wonach das qualitativ beste dieser Signale zu einem Operator (z.B. einem Fluglotsen) durchgeschaltet wird. Im Gegensatz zu Kommunikationsverläufen in zellularen Telefonsystemen werden beim Flugfunk oft nur kurze Sätze oder Kommandos übertragen, weshalb die Signalauswahl jeweils sehr schnell erfolgen muss.

Die Messung des SNR für die sogenannte "Best Signal Selection (BSS)" im Flugfunk erfolgt nach einem bekannten Verfahren durch den Vergleich des Signalpegels in einem tiefen Frequenzbereich und des Rauschpegels in einem hohen Frequenzbereich des Sprachsignals. Nach einem weiteren Verfahren werden Sprachsignale mittels Fouriertransformation (Fast Fourier Transformation (FFT)) in den Frequenzbereich transformiert, wonach einzelne Frequenzlinien in bezug auf Signalqualität untersucht werden.

Nebst der Messung des SNR ist die Messung des Articulation Index (nachstehend nur noch AI), der ein Mass für die zu erwartende Verständlichkeit der Sprache ist, von Bedeutung. Teilt man den Frequenzbereich eines Sprachsignals (etwa 300 Hz bis 5'000 Hz) in zehn Frequenzbereiche auf, die je 10% zur Silbenverständlichkeit beitragen, stellt man fest, dass diese zehn Frequenzbereiche unterschiedlich breit sind (siehe D. Lochmann, a.a.O., Bild 1.41). Ein schmaler und ein breiter Frequenzbereich, die gleich stark zur Silbenverständlichkeit beitragen, erhalten bei der Berechnung des AI vorzugsweise dasselbe Gewicht (siehe auch J. R. Deller, J. G. Proakis, J. H. L. Hansen, Discrete-Time Processing of Speech Signals, Macmillan Publishing Company, New York, Kapitel 9.3, Seiten 580 - 587).

Aufgrund der kurzen Kontaktzeiten zwischen der mobilen Station und der Zentrale muss die Messung der Signalqualität sehr schnell und mit hoher Präzision erfolgen. Geräusche bei der Umschaltung des Übertragungskanals sind vorzugsweise zu vermeiden. Aufgrund dieser Anforderungen ergibt sich für die Zentrale ein sehr hoher Aufwand zur Verarbeitung der empfangenen Signale.

Eine Möglichkeit zur Berechnung von Sprach- und der Rauschleistung ist in Natalie Virag, SPEECH ENHANCEMENT BASED ON MASKING PROPERTIES OF THE HUMAN AUDITORY SYSTEM, Dissertation, École Polytechnique Fédérale de Lausanne, Lausanne 1996 beschrieben. In Kapitel 5.6 (Seite 99 ff.) ist der Speech/Noise Detection Algorithmus von Lynch et al. erwähnt (J.F. Lynch, J.G. Josenhans and R.E. Crochiere, "Speech/silence segmentation for realtime coding via rule based adaptive endpoint detection", in Proc. IEEE ICASSP, pp. 1348-1351, Dallas, April 1987). Bei diesem Algorithmus handelt es sich um einen auf Energie basierenden Detektor, welcher verschiedene Annahmen über Sprache und Rauschen in die Berechnung mit einbezieht. Es werden dabei verschiedene Metriken berechnet, welche schliesslich eine Zuordnung des Signals zu 'Rauschen' oder zu 'Sprache' erlauben. Der Algorithmus enthält somit zur Zustandsunterscheidung ebenfalls eine Sprach- und eine Rauschschwelle. Die Sprach- und die Rauschschwelle werden jedoch anders berechnet. Zudem wird das Rauschen in Lynch's Algorithmus nur in wirklichen Sprachpausen geschätzt. Da aber die zu bewertenden Pilotensignale sehr kurz sind und deshalb fast keine Sprachpausen vorkommen, muss das Rauschen auch während stimmlosen Lauten geschätzt werden können.

Der vorliegenden Erfindung liegt daher die Aufgabe zugrunde, ein Verfahren und eine Vorrichtung zur Auswahl eines optimalen Übertragungskanals anzugeben, durch die eine schnelle und präzise Messung der Qualität des Sprachsignals mit geringem Aufwand möglich ist.

Diese Aufgabe wird durch die im kennzeichnenden Teil des Patentanspruchs 1 bzw. 13 angegebenen Massnahmen gelöst. Vorteilhafte Ausgestaltungen der Erfindung sind in weiteren Ansprüchen angegeben.

Erfindungsgemäss erfolgt die Messung der Qualität des empfangenen Signals in den dezentralen Empfangseinheiten, wonach das vorzugsweise komprimierte Sprachsignal zusammen mit dem ermittelten Qualitätsindex zur Zentrale übermittelt wird, die das qualitativ beste Signal zu einem Operator durchschaltet. Die Zentrale wird daher stark entlastet und benötigt demgemäss weniger Resourcen zur Erledigung ihrer Aufgaben. Insbesondere bei der Übertragung komprimierter Sprachsignale sind in den dezentralen Empfangseinheiten die zur Bestimmung des Qualitätsindexes erforderlichen Mittel bereits vorhanden. Die Ermittlung des Qualitätsindexes zu den Sprachsignalen erfolgt daher in kürzester Zeit mit geringem Aufwand parallel in den dezentralen Empfangseinheiten. Zur präzisen Bestimmung des Qualitätsindexes werden vorzugsweise das SNR und der AI verwendet. Die Umschaltung des Übertragungskanals erfolgt in der Zentrale jeweils während einer Sprachpause, wodurch Störungen, die z.B. aufgrund von Laufzeitunterschieden der Signale auftreten können, vermieden werden.

Die Erfindung wird nachfolgend anhand einer Zeichnung beispielsweise näher erläutert. Dabei zeigt:

Fig. 1 ein erfindungsgemässes Kommunikationssystem für den Flugfunk
Fig. 2 ein Diagramm zur Darstellung der Zustände eines empfangenen Signals
Fig. 3 das Diagramm von Fig. 2, erweitert um zwei weitere Zustände
Fig. 4 ein drei Sekunden langes Sprachsignal
Fig. 5 die Aufzeichnung der Signal-, Rausch- und Sprachleistung p[k], n[k] bzw. s[k] des Signals von Fig. 4
Fig. 6 ein Ausschnitt des Signals von Fig. 4 mit Kurven, die zur Berechnung der Rauschleistung benötigt werden,
Fig. 7 der Ausschnitt von Fig. 6 mit eingezeichnetem Verlauf der Rauschleistung n[k],
Fig. 8 vier qualitativ unterschiedliche Verläufe eines über getrennte Kanäle übertragenen Sprachsignals,
Fig. 9 die Verläufe des SNR (signal-to-noise-ratio) zu den Signalverläufen von Fig. 8,
Fig. 10 ein Ausschnitt des Signals von Fig. 4 mit zugehörigen Rausch- und Sprachschwellen tn[k],ts[k],
Fig. 11 den dem Ausschnitt von Fig. 10 zugehörigen Verlauf von Zustandsänderungen,
Fig. 12 die Verläufe des Articulation Index zu den Signalen von Fig. 8,

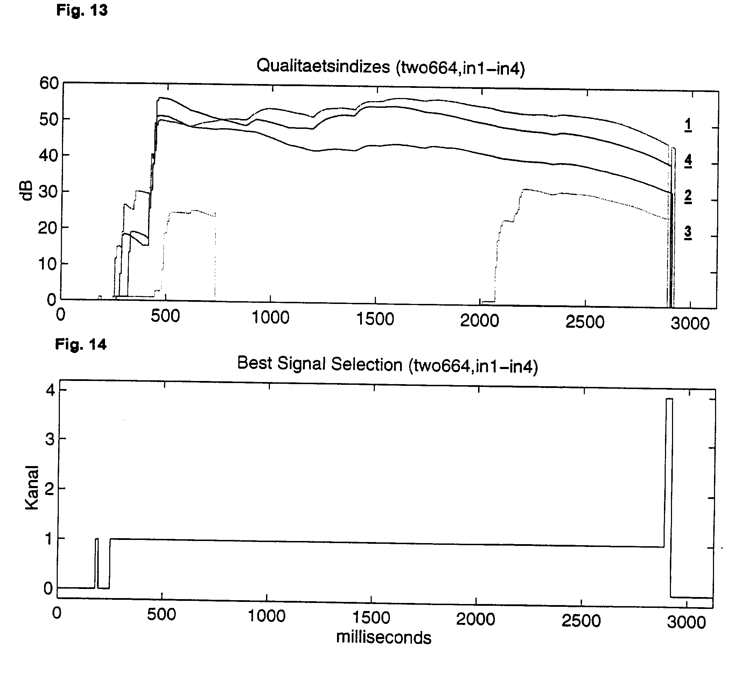

Fig. 13 die Verläufe zu den Signalen von Fig. 8 korrespondierenden Qualitätsindizes und
Fig. 14 den Verlauf der Kanalwahl in Abhängigkeit der Qualitätsindizes von Fig. 13.

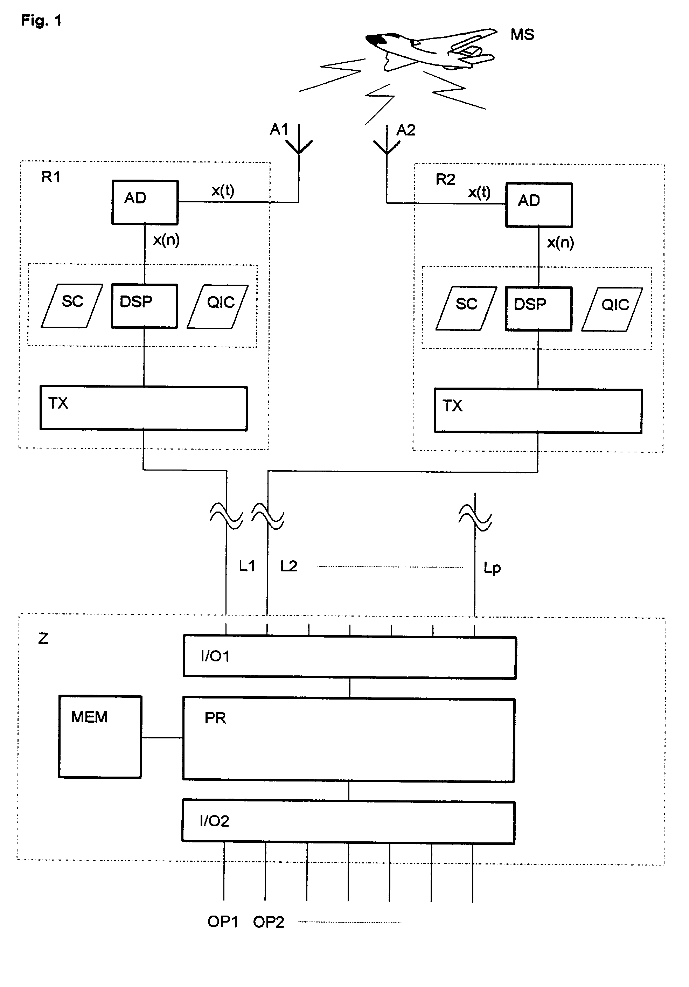

Fig. 1 zeigt ein erfindungsgemässes Kommunikationssystem für den Flugfunk, bei dem mehrere dezentral angeordnete Empfänger R1, R2, ..., Rp, die über Antennen A1, A2, ..., Ap mit Flugzeugen in Kontakt treten können, über Leitungen L1, L2, ..., Lp mit einer Flugfunkzentrale Z (nachstehend nur noch Zentrale Z) verbunden sind, durch die eine Auswahl aus mehreren Signalen, die von einer mobilen Station MS parallel über p verschiedene Übertragungskanäle (Antennen A1, Empfänger R1 und Leitungen L1; ...; Antennen Ap, Empfänger Rp und Leitungen Lp) zur Zentrale Z übertragen wurden, die wenigstens einen zur Auswertung und Durchschaltung von Signalen geeigneten Prozessor PR aufweist, der über Schnittstellenbaugruppen 1/01 und 1/02 mit den Leitungen L1, ..., Lp sowie den Endgeräten der Operatoren verbunden ist.

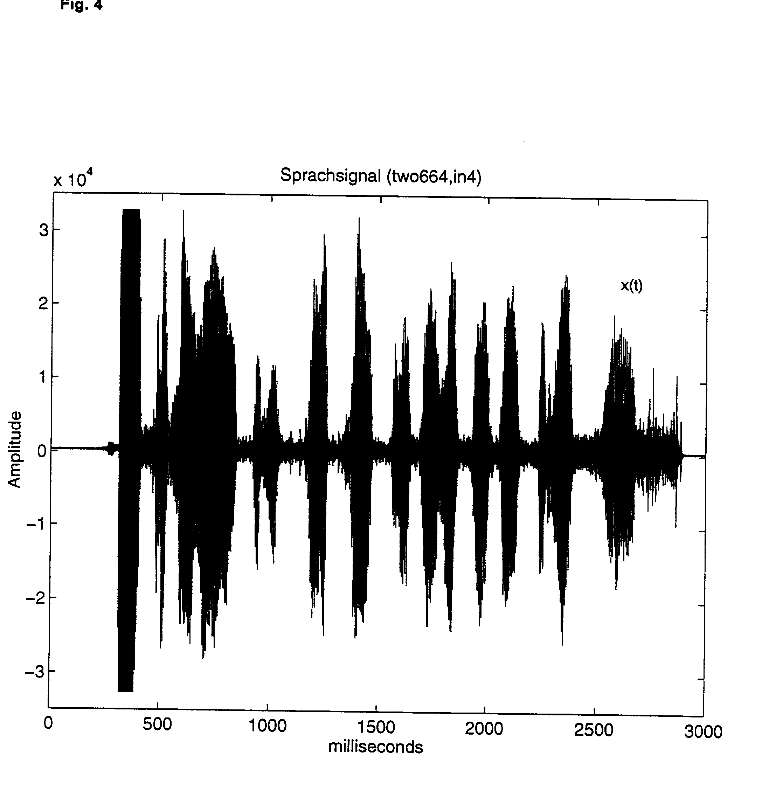

In den Empfängern R1, ..., Rp ist ein Analog/Digital-Wandler AD vorgesehen, durch den die empfangenen Signale x(t) (siehe das in Fig. 4 gezeigte Sprachsignal) digitalisiert und an einen Signalprozessor DSP übergeben werden, der einen zu den Signalen x(n) korrespondierenden Qualitätsindex bildet und diesen zusammen mit dem vorzugsweise komprimierten Sprachsignal x(n)$_c$ über eine Sendestufe TX zur Zentrale Z übermittelt. Dazu stehen dem Signalprozessor DSP Module SC und QIC zur Verfügung in denen die Verfahrensabläufe zur Indexbildung und zur Signalkompression festgelegt sind.

Für die Berechnung des SNR's (und, sofern verwendet, des Articulation Indexes AI) und damit auch für die Bestimmung des Qualitätsindexes, wird die Leistung des digitalen Empfangssignals x(n) benötigt. Dazu wird das Signal zuerst zeitlich in Rahmen von M (z.B. = 64) Abtastwerten unterteilt, d.h.

$$\vec{x}[k] = (x((k-1)M+1),\ x((k-1)M+2),......,\ x(kM))^T \qquad (1)$$

Anschliessend wird jeder einzelne Abtastwert quadriert und zusammen mit den anderen quadratischen Abtastwerten aufsummiert. Die über einen Rahmen gemittelte Signalleistung p[k] erhält man, wenn die Summe noch durch die Anzahl Abtastwerte M geteilt wird:

$$p[k] = \frac{\sum_{i=1}^{M} x^2 ((k-1)M + i)}{M} \; .$$

(2)

Das SNR ergibt sich aus dem logarithmischen Verhältnis von Sprach- zu Rauschleistung, welche beide dem Kurvenverlauf der berechneten Signalleistung p[k] adaptiv angepasst werden.

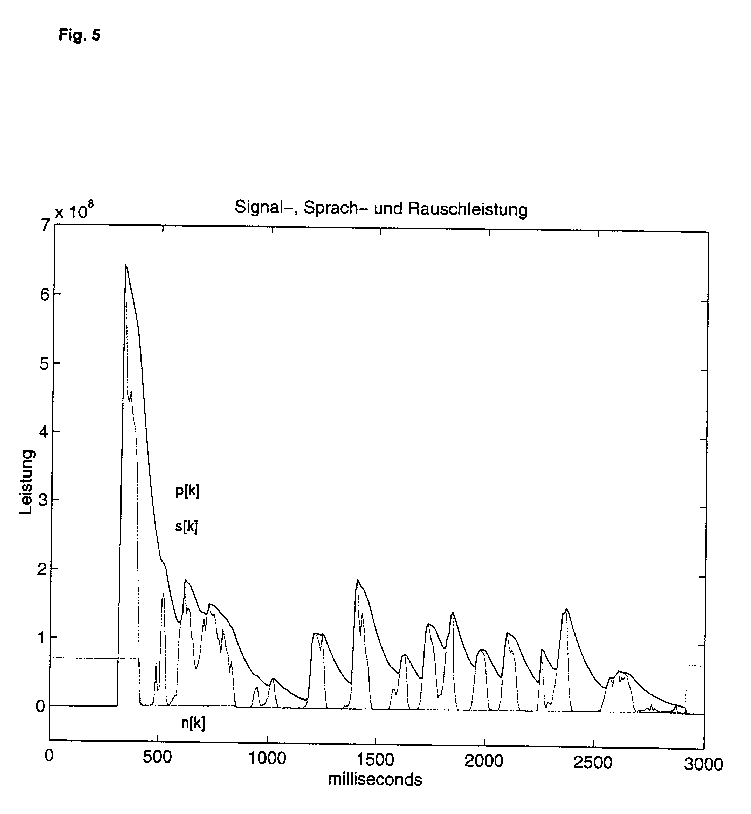

Wie in Fig. 5 gezeigt, beschreibt die Sprachleistung s[k] eine Art Enveloppe der Signalleistung p[k]. Falls die Signalleistung p[k] des aktuellen Rahmens grösser ist als die Sprachleistung s[k-1] des letzten Rahmens, so nimmt die Sprachleistung s[k] direkt den Wert der Signalleistung p[k] an. Ist dies jedoch nicht der Fall, so wird die momentane Signalleistung p[k] mit der letzten Sprachleistung s[k-1] exponentiell geglättet und der neuen Sprachleistung s[k] zugewiesen. In Gleichung 3 wird die Berechnung der Sprachleistung wie folgt zusammengefasst:

$$s[k] = \begin{cases} p[k] & \text{falls } s[k-1] < p[k], \\ (1 - \gamma_s) \cdot p[k] + \gamma_s \cdot s[k-1] & \text{sonst.} \end{cases}$$

(3)

Der Vergessensfaktor $\gamma_s$ wird z.B. gleich 0.93 gesetzt. Am Anfang eines Empfangssignals wird die Sprachleistung auf Null initialisiert.

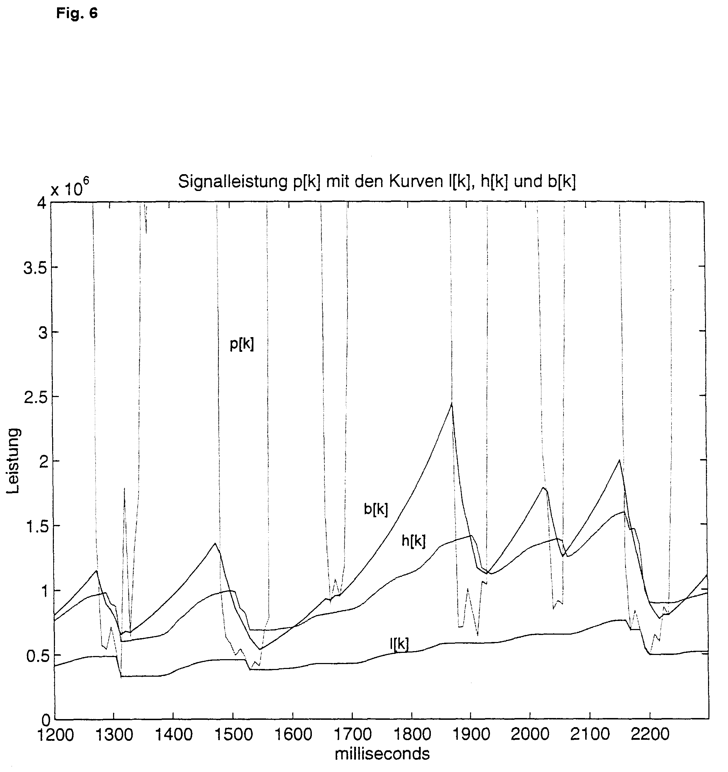

In Fig. 6 ist gezeigt, dass für die Berechnung der Rauschleistung n[k] mit Hilfe einer Kurve l[k] (l für low) der untere Verlauf der Signalleistung nachgebildet wird. Die Kurve l[k] entspricht somit der unteren Grenze der Rauschleistung:

$$l[k] = \begin{cases} (1 - \gamma_l) \cdot p[k] + \gamma_l \cdot l[k-1] & \text{falls } p[k] < l[k-1], \\ (1 - \lambda_l[k]) \cdot p[k] + \lambda_l[k] \cdot l[k-1] & \text{sonst.} \end{cases}$$

(4)

Wie in Gleichung 4 zu sehen ist, sind zwei Vergessensfaktoren $\gamma_l$, $\lambda_l$ für die Berechnung von l[k] nötig. Dabei ist $\gamma_l$ konstant z.B. gleich 0.1. Diese schwache exponentielle Glättung verhindert, dass l[k] am Anfang eines Empfangssignals zu tief gesetzt wird und dem unteren Verlauf der Signalleistung p[k] eine gewisse Zeit nicht folgen kann. Der Vergessensfaktor $\lambda_l[k]$ wird adaptiv eingestellt. Er ist am Anfang eines Signals gleich seinem maximalen Wert $\gamma_{l,max}$. Bei steigender Rauschleistung wird der Vergessensfaktor $\lambda_l[k]$ jedoch von Rahmen zu Rahmen verkleinert. Somit erhalten die neuen Werte der Signalleistung p[k] ein grösseres Gewicht und l[k] kann der unteren Grenze der Rauschleistung besser folgen. Der minimale Wert, den $\lambda_l[k]$ annehmen kann, ist gleich $\lambda_{l,min}$. Sobald die Signalleistung p[k] wieder kleiner ist als l[k-1], wird wieder die Gleichung mit dem Vergessensfaktor $\gamma_l$ benutzt, der im nächsten Rahmen wieder seinen maximalen Wert $\gamma_{l,max}$ annimmt. Für den Vergessensfaktor $\lambda_l[k]$ gilt also:

$$\lambda_l[k] = \max\left( \lambda_{l,max} - \lambda_{l,diff} \cdot \left( \frac{\tau_l[k]}{T_l} \right)^c , \lambda_{l,min} \right) ,$$

(5)

wobei $\gamma_{l,diff} = \gamma_{l,max} - \gamma_{l,min}$. Der maximale Wert von $\lambda_l[k]$ beträgt z.B. 0.9999 und der minimale 0.999. Mit dem Wert des Parameters c (z.B. c = 6) wird der eher unkritische Änderungsverlauf von $\lambda_l[k]$ eingestellt. Die Zeitkonstante T1 ist z.B. gleich 120, während

$$\tau_l[k] = \begin{cases} 0 & \text{falls } l[k-2] > l[k-1], \\ \tau_l[k-1] + 1 & \text{sonst.} \end{cases}$$

(6)

Am Anfang eines Empfangssignals sollte die Kurve l[k] nicht zu tief angesetzt werden. Der Grund liegt darin, dass die Nachführung von l[k] bei Signalen mit grosser Rauschleistung zu lange dauern und so zu Beginn ein zu gutes SNR ausgegeben würde. Die Initialisierung von l[k] wird deshalb genügend gross gewählt. Sie heisst ninit und liegt etwas unterhalb der grössten zu erwartenden Rauschleistung, welche je nach System bzw. Empfänger neu bestimmt werden muss.

Damit die Rauschleistung schliesslich berechnet werden kann, muss noch ihre obere Grenze h[k] (h für high) gefunden werden. Die Grenze liegt um einen Faktor $f_h$ [k] höher als l[k], d.h.

$$h[k] = f_h[k] \cdot l[k]. \tag{7}$$

Für die Bestimmung des Faktors $f_h$ [k] braucht es eine weitere Kurve b[k]. Sie passt sich ebenfalls adaptiv der Signalleistung p[k] an und wird wie folgt berechnet:

$$b[k] = \begin{cases} w_b \cdot b[k-1] & \text{falls } p[k] > b[k-1], \\ (1-\gamma_b) \cdot p[k] + \gamma_b \cdot b[k-1] & \text{sonst.} \end{cases} \tag{8}$$

Der Wachstumsfaktor $w_b$ wird z.B. gleich 1.04 und der Vergessensfaktor $\gamma_b$ gleich 0.75 gewählt. Initialisiert wird die Kurve b[k] mit dem Wert 0.6*ninit. Der Faktor $f_h$ [k] wird nun mit Hilfe von b[k-1], l[k-1] und h[k-1] bestimmt:

$$f_h[k] = \begin{cases} \min\left( \max\left( \dfrac{b[k-1]}{l[k-1]}, f_{h,\min} \right), f_{h,\max} \right) & \text{falls } h[k-1] > b[k-1], \\ \min\left( w_f \cdot f_h[k-1], f_{h,\max} \right) & \text{sonst.} \end{cases} \tag{9}$$

Die Werte für die verschiedenen Parameter sind z.B. : $f_{h,\max}$ = 15, fh,min = 1.8 und für den Wachstumsfaktor $w_f$ = 1.008. Am Anfang eines Empfangssignals wird der Faktor fh [k] auf seinen minimalen Wert $f_{h,\min}$ gesetzt. Dies bedeutet, dass die Kurve h(k) der Kurve b(k) folgt, sofern die Kurve h(k) über der Kurve b(k) und der Faktor $f_h$[k] zwischen den Eckwerten $f_{h,\max}$, $f_{h,\min}$ liegt. Andernfalls wird die Steigung der Kurve h(k) durch den Wachstumsfaktor $w_f$ bestimmt.

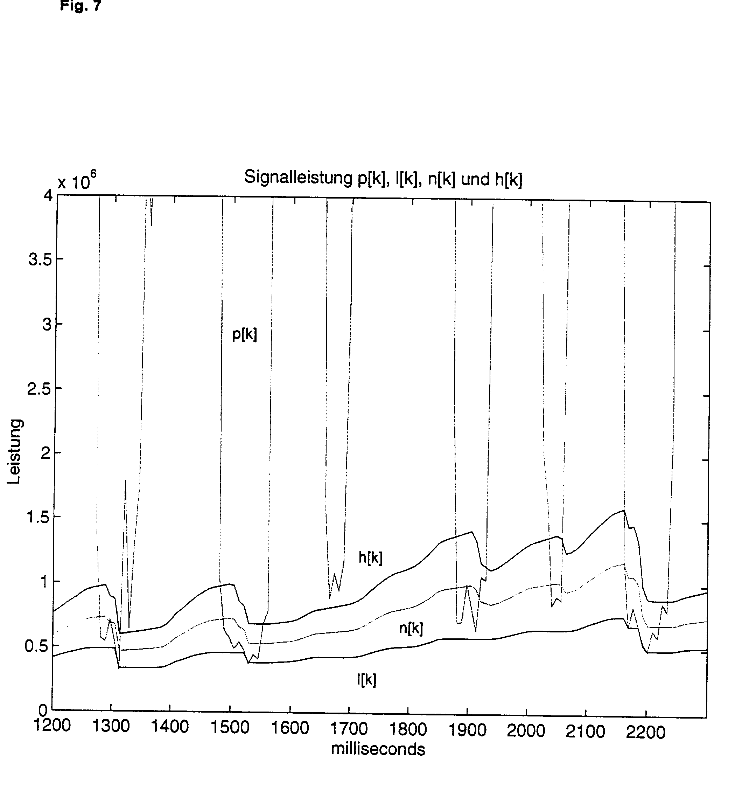

Die Rauschleistung n[k] liegt, wie in Fig. 7 gezeigt, zwischen ihrer oberen Grenze h[k] und ihrer unteren Grenze l[k]. Sie berechnet sich somit aus dem arithmetischen Mittel der beiden Kurven, d.h.:

$$n[k] = \frac{(l[k]+h[k])}{2} = \frac{(1+f_h[k])}{2} \cdot l[k] \tag{10}$$

Die Berechnung der Rauschleistung n[k] kann auch weniger aufwendig erfolgen. Dazu wird lediglich die Kurve l[k] verwendet, deren Werte gegebenenfalls mit einem konstanten oder variablen Faktor (const; $f_q$[k]) multipliziert werden (z.B. : n[k] = l[k], n[k] = const *l[k], n[k] = $f_q$[k]*l[k]).

Wie erwähnt, erhält man das SNR aus dem logarithmischen Verhältnis zwischen Sprach- und Rauschleistung. Vorzugsweise ist es gegen unten durch $SNR_{\min}$ = -1 begrenzt. Die Gleichung für das SNR lautet also:

$$SNR[k] = \max\left( 10 \cdot \log_{10} \frac{s[k]}{n[k]}, SNR_{\min} \right) \tag{11}$$

Damit der Verlauf des SNR's keine allzu grosse Schwankungen aufweist, wird der neue SNR-Wert zum Schluss noch exponentiell geglättet. Das geglättete SNR ($SNR^{(g)}$[k]) lässt sich wie folgt darstellen:

$$SNR^{(g)}[k] = \begin{cases} (1-\lambda_{SNR}[k]) \cdot SNR[k] + \lambda_{SNR}[k] \cdot SNR^{(g)}[k-1] & \text{falls } SNR[k] > SNR^{(g)}[k-1], \\ (1-\gamma_{SNR}[k]) \cdot SNR[k] + \gamma_{SNR}[k] \cdot SNR^{(g)}[k-1] & \text{sonst.} \end{cases} \tag{12}$$

Am Anfang eines Signals muss die Rauschleistung zuerst daran angepasst werden. Um diese anfängliche Ungenauigkeit nicht zu lange im SNR mitzuschleppen, ist es deshalb von Vorteil, wenn die Glättung zu Beginn weniger stark ist. Wie man in Gleichung (12) erkennen kann, sind die Vergessensfaktoren bei fallendem und bei steigendem SNR verschieden. Der Grund liegt darin, dass die Sprachleistung eher zu hoch, die Rauschleistung eher zu tief und damit das SNR ein wenig zu hoch geschätzt werden. Um dieser Tatsache Rechnung zu tragen, werden solche Fehler im weiteren Signalverlauf nicht zu stark zu gewichtet. Bei fallendem SNR wird deshalb früher als bei steigendem SNR mit dem maximalen Vergessensfaktor geglättet. Bei steigendem SNR ist der Vergessensfaktor gleich:

$$\lambda_{SNR}[k] = \min\left(\lambda_{SNR,\min} + \lambda_{SNR,diff} \cdot \left(\frac{\tau_{SNR}[k]}{T_{SNR}}\right)^d , \lambda_{SNR,\max}\right),\tag{13}$$

wobei $\lambda_{SNR,diff} = \lambda_{SNR,\max} - \lambda_{SNR,\min}$. Die Werte für $\lambda_{SNR,\max}$ und $\lambda_{SNR,\min}$ sind 0.85 bzw. 0.05. Der Exponent d ist gleich 5, die Zeitkonstante $T_{SNR}$ gleich 30 und $\tau_{SNR}[k]$ wird von Rahmen zu Rahmen um Eins erhöht. Der Vergessensfaktor bei fallendem SNR lässt sich wie folgt berechnen:

$$\gamma_{SNR}[k] = \begin{cases} \gamma_{SNR,\min} & \text{falls } \tau_{SNR}[k] < \dfrac{T_{SNR}}{2}, \\ \gamma_{SNR,\max} & \text{sonst,} \end{cases}\tag{14}$$

wobei $\gamma_{SNR,\max} = 0.99$ und $\gamma_{SNR,\min} = 0.4$.

Das SNR ist erst nach ca. 150-200 ms aussagekräftig, denn die Sprach- und die Rauschleistung brauchen am Anfang eine gewisse Zeit bis sie richtig eingestellt sind. Ein qualitativ gutes Sprachsignal erreicht etwa ein SNR von 22-27 dB, während ein qualitativ schlechtes in einem Bereich von 5-10 dB liegt.

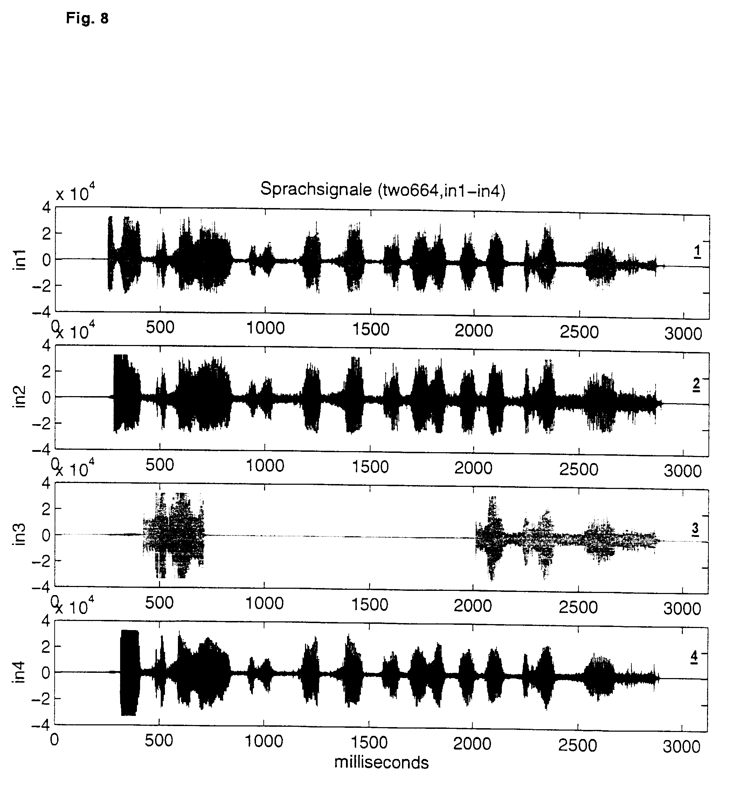

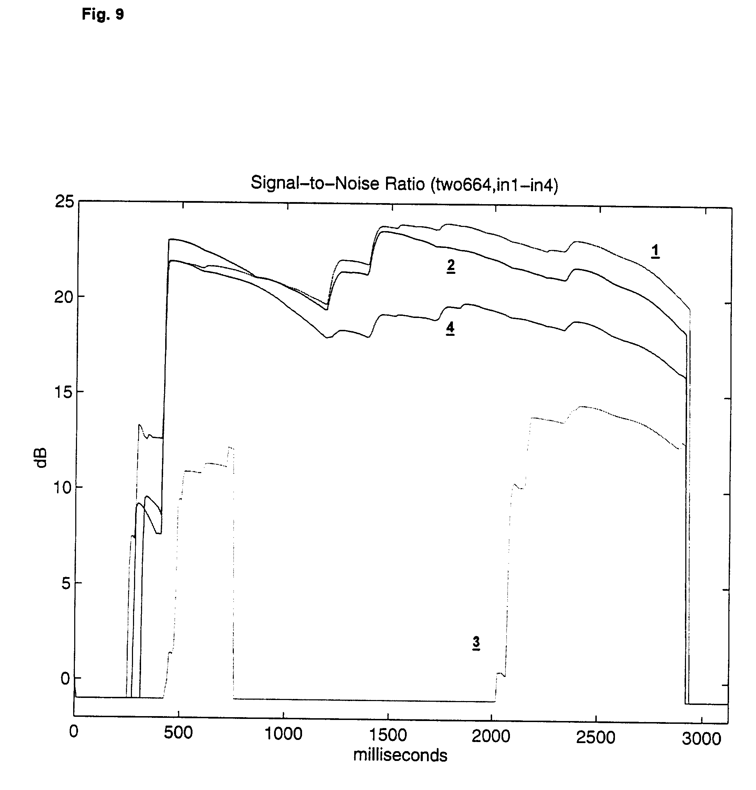

Fig. 8 zeigt vier Sprachsignale unterschiedlicher Qualität, für die die erfindungsgemäss ermittelten Verläufe der SNR in Fig. 9 dargestellt sind. Die gezeigten Verläufe der SNR weichen nur wenig von den dazu korrespondierenden Verläufen der mit nachstehend beschriebene Massnahmen ermittelten Articulation Indizes (AI's) ab, die in Fig. 12 gezeigt sind. Interessant ist, dass zumindest im vorliegenden Beispiel die Unterschiede zwischen den drei besten Signalen durch die Verläufe der AI's am deutlichsten gezeigt werden.

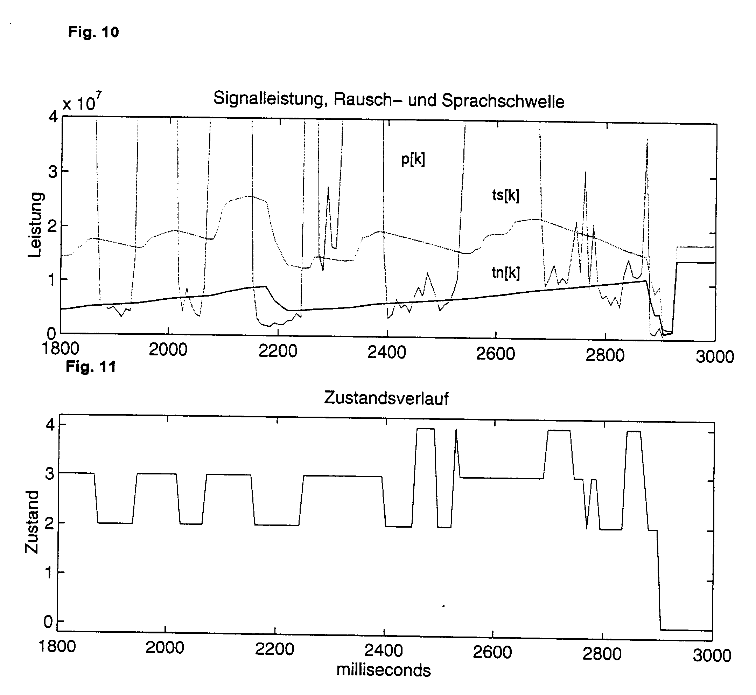

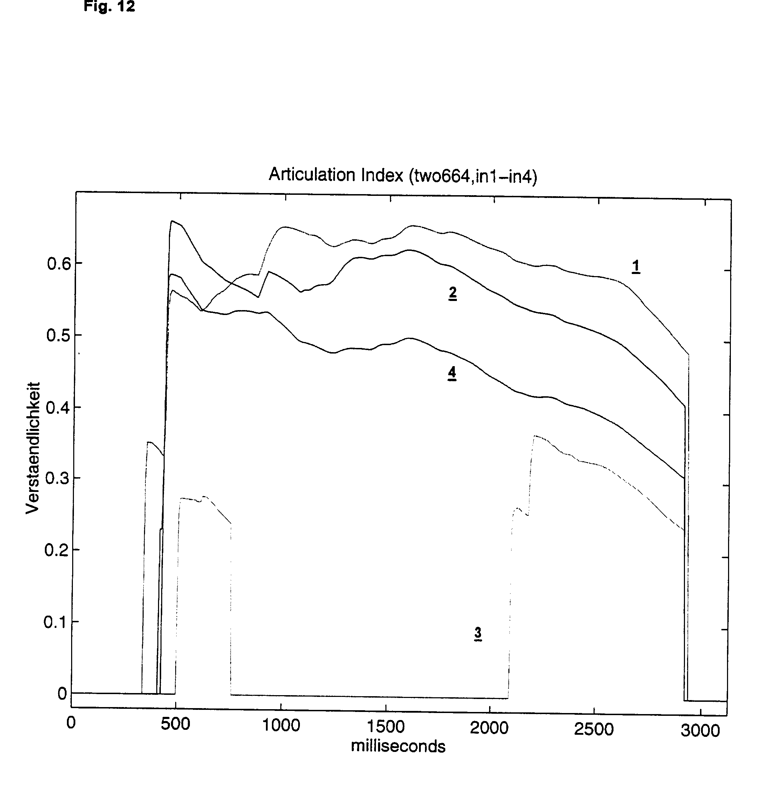

Eine der ersten, allgemein akzeptierten objektiven Qualitätsmessungen war der Articulation Index (AI). Der AI wurde 1947 von French und Steinberg als Qualitätsmass für analoge Signale entwickelt. Obwohl er nur einen Aspekt der Qualität, nämlich die Verständlichkeit eines Sprachsignals betrachtet, gilt er als ein sehr zuverlässiges Qualitätsmass. Der AI geht davon aus, dass die Verständlichkeit eines Sprachsignals am Verständlichkeitsverlust über eine Anzahl von Frequenzbänder, welche das gesamte Sprachspektrum abdecken, gemessen werden kann. Im Gegensatz zum SNR wird der AI im Frequenzbereich berechnet. Das Schwierige bei der Berechnung des AI's ist die Bestimmung der sich zeitlich ändernden Sprach- und Rauschspektren, welche beide aus 256er-Fouriertransformationen gewonnen werden. Da Pilotensignale in der Regel sehr kurz sind und deshalb selten echte Sprachpausen auftreten, müssen die Pausen zwischen den einzelnen Silben für die Bestimmung des Rauschspektrums benützt werden. Diese Silbenpausen können zum Teil neben dem Rauschen auch stimmlose Sprache, wie zum Beispiel ein 's' oder ein 'f', enthalten. Um festzustellen, ob das Signal momentan aus Sprache oder aus Rauschen besteht, wird mit Hilfe zweier adaptiver Schwellen $t_s[k]$, $t_n[k]$ (Sprach- und Rauschschwelle), die in Fig. 10 eingezeichnet sind, während dem Empfang eines Signals zwischen drei verschiedenen Zuständen entschieden. Es sind dies die Zustände "Sprache", "Rauschen" und "undefiniert". Befindet sich die mittlere Signalleistung eines Rahmens über der Sprachschwelle $t_s[k]$, so besteht das Signal während diesem Rahmen aus Sprache (Zustand 3). Wird jedoch die Rauschschwelle $t_n[k]$ unterschritten, ist Rauschen (Zustand 2) vorhanden. Da es auch Phasen gibt, in welchen die Signalleistung zwischen den beiden Schwellen liegt und so das Signal nicht eindeutig der Sprache oder dem Rauschen zugeordnet werden kann, existiert noch der dritte Zustand "undefiniert" (Zustand 4). Die Übergänge zwischen den einzelnen Zuständen sind in Fig. 11 und den Fig. 2 und 3 dargestellt. Die Abkürzung H steht dabei für die Hysterese, welche später noch behandelt wird.

Die Rauschschwelle $t_n[k]$ sollte sich klar über der Rauschleistung befinden. Sie liegt deshalb um einen konstanten Faktor $f_n$ (z.B. $f_n = 1.6$) über der adaptiven, oberen Grenze der Rauschleistung, d.h.:

$$t_n[k] = f_n \cdot h[k] .\tag{15}$$

Die Sprachschwelle sollte so weit wie möglich über der Rauschschwelle sein, denn damit ist eine klare Trennung von Sprache und Rauschen (Rauschen und stimmlose Sprache) gewährleistet. Da der Abstand zwischen Rauschen und Sprache stark vom SNR des Signals abhängt, liegt die Sprachschwelle $t_s[k]$ um einen adaptiven Faktor $f_s[k]$ höher als die zuvor berechnete Rauschschwelle tn[k].

$$t_s[k] = f_s[k] \cdot t_n[k] \qquad (16)$$

Der Faktor $f_s[k]$ wächst proportional zum ungeglätteten SNR an. Je grösser also das SNR ist, desto besser kann zwischen Rauschen und Sprache unterschieden und desto höher kann die Sprachschwelle gesetzt werden. Z.B. kann die Zahl sechs als Divisor des SNR's verwendet werden:

$$f_s[k] = \max\left( \frac{SNR[k-1]}{6} \quad , \quad f_{s,\min} \right). \qquad (17)$$

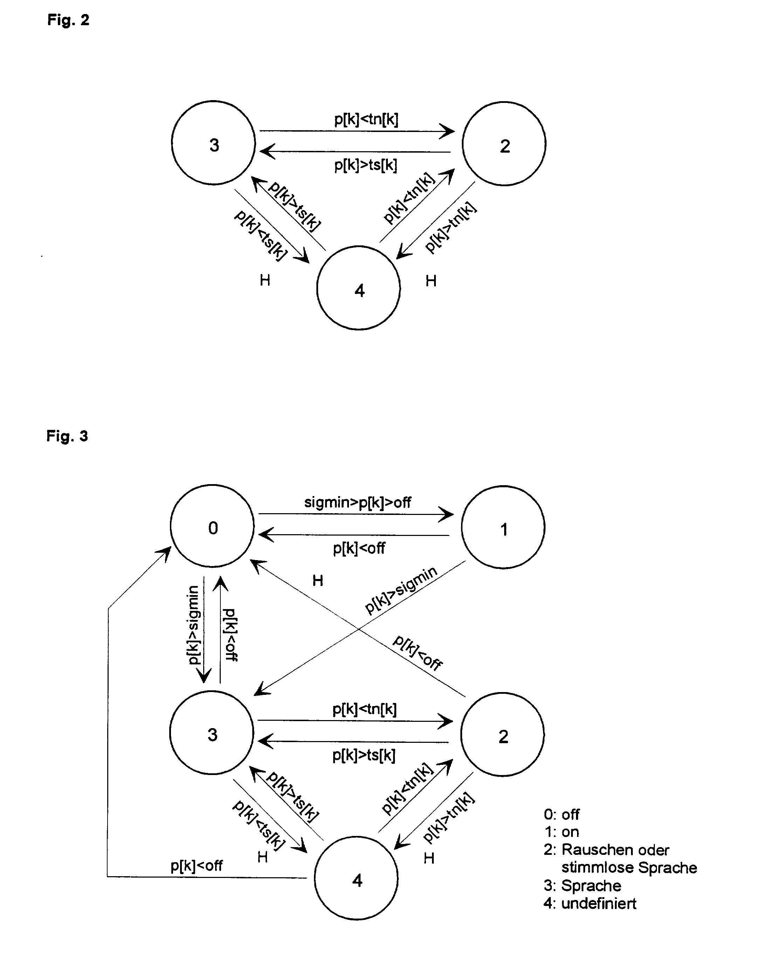

Wie in der obigen Gleichung 17 zu sehen ist, wird der Faktor $f_s[k]$ gegen unten beschränkt. Der Wert von $f_{s,\min}$ beträgt z.B. 1.2. Bevor nun der AI berechnet wird, wird noch genauer auf die Zustandsbestimmung eingegangen. Zuvor wurden drei verschiedene Zustände eingeführt. Es sind dies die Zustände "Sprache", "Rauschen" und "undefiniert". Zwei in Fig. 3 gezeigte Fälle wurden jedoch noch nicht berücksichtigt. Falls am Empfänger kein Signal empfangen wird, befindet sich der Empfänger im Zustand "off" (Zustand 0). Dabei wird für jeden Rahmen kontrolliert, ob sich die Signalleistung über der konstanten Schwelle off befindet. Wenn ja, ist ein Signal vorhanden und der Zustand "off" wird verlassen. Der Wert der Schwelle off liegt etwas über der maximalen Signalleistung bei Nichtempfang und sollte für jeden Empfänger spezifisch eingestellt werden. Bei der Untersuchung verschiedener Pilotensignale wurde festgestellt, dass Empfänger einen sogenannten 'Einschaltstöreffekt' aufweisen können. Dieser Einschaltstöreffekt tritt meist am Anfang eines Empfangssignals auf. Je nach Empfänger ist er unterschiedlich lang und hoch. Seine Leistung ist jedoch immer kleiner als die des Rauschens und grösser als der Wert "off". Damit nun dieser Einschaltstöreffekt nicht als Rauschen identifiziert wird und so zuerst ein falsches und zu kleines Rauschspektrum liefert, wird am Anfang eines Signals geprüft, ob die Signalleistung über der konstanten Schwelle sigmin liegt. Ist dies der Fall, so wird sofort der Zustand "Sprache" angenommen. Falls nicht, befindet sich der Empfänger im Zustand "Einschaltstöreffekt", welcher von nun an Zustand "on" (Zustand 1) genannt wird. Am Anfang eines Empfangssignals können also nur die Zustände "Sprache" und "on" angenommen werden. Der Schwellwert sigmin liegt möglichst tief, aber immer über der Leistung des Einschaltstöreffekts.

Um die Spektren der Sprache und des Rauschens zu erhalten, werden Fouriertransformationen über jeweils vier Rahmen (4 x 64 = 256 Abtastwerte) ausgeführt. Damit man ein sauberes Spektrum erhält, muss das Empfangssignal während mindestens vier Rahmen (zu 8 ms) im gleichen Zustand sein. Bei vier aufeinanderfolgenden "Sprachrahmen" kann nun zum Beispiel ein neues Sprachspektrum berechnet werden. Dasselbe gilt für das Rauschspektrum bei vier aufeinanderfolgenden "Rauschrahmen". Die beiden Spektren können nur sporadisch berechnet werden, denn zwischen den verschiedenen Zuständen wird manchmal ziemlich oft gewechselt. Aus diesem Grund wird zusätzlich noch eine Hysterese eingebaut, welche einzelne undefinierte Zustände entweder der Sprache oder dem Rauschen zuordnet. Zustandsübergänge von "Rauschen" auf "undefiniert" oder von "Sprache" auf "undefiniert" werden um einen Rahmen verzögert. Wenn sich also das Signal im Zustand "Rauschen" oder "Sprache" befindet, wird ein Flag gesetzt. Bei einem Wechsel in den undefinierten Zustand, wird nun zuerst geschaut, ob ein Flag den Wert Eins hat. Falls ja, nimmt der Zustand z[k] nochmals denjenigen Zustand an, bei welchem das Flag gesetzt wurde. Das Flag wird anschliessend wieder auf Null zurückgesetzt. Liegt die Signalleistung im nächsten Rahmen immer noch im undefinierten Bereich, so ist nun kein Flag mehr gleich Eins und der Zustand 4 (undefiniert) kann angenommen werden. Ist das Signal aber wieder in den vorherigen Zustand zurückgekehrt, so wird das Flag wieder gesetzt und es kann wieder von vorne begonnen werden. Damit werden einzelne Zustandsübergange von Zustand 2 auf 4 oder von Zustand 3 auf 4 eliminiert. Da das Rauschspektrum meist weniger oft berechnet wird als das Sprachspektrum, wird beim Zustandsübergang von Zustand 2 auf Zustand 0 ebenfalls eine Hysterese eingeführt. Sie funktioniert ähnlich wie die vorher erklärte Hysterese. Der Unterschied liegt nur darin, dass der Zustand selber zwar nicht gewechselt wird, aber die Fouriertransformation über einen solchen Zustandsübergang trotzdem berechnet werden darf. Aufgrund dieser eingeführten Hysteresen können nun öfter Fouriertransformationen durchgeführt werden, ohne dass die Genauigkeit der Spektren darunter leidet.

Der AI kann vereinfacht als frequenzgewichtetes SNR betrachtet werden. Für die Berechnung des AI's werden das Sprach- und das Rauschspektrum benötigt. Die Spektren werden dabei jeweils in zwanzig unterschiedlich breite Frequenzbänder unterteilt. In Tabelle 1 sind die Mittenfrequenzen und die Grenzen der verschiedenen Frequenzbänder angegeben. Es wird nun davon ausgegangen, dass die einzelnen Frequenzbänder voneinander unabhängig sind und alle den gleichen Anteil zur Verständlichkeit eines Sprachsignals beitragen. Frequenzbänder, welche für die Verständlichkeit eines Sprachsignals wichtig sind, haben deshalb eine kleinere Bandbreite als weniger wichtige.

Nachdem das Sprach- und das Rauschspektrum in die verschiedenen Frequenzbänder aufgeteilt wurden, werden die verschiedenen SNR's der einzelnen Frequenzbänder berechnet und auf Eins normiert. Anschliessend wird die Summe aller SNR's gebildet und durch die Anzahl Frequenzbänder geteilt. Ein Sprachsignal erhält so also einen AI zwischen Null bis Eins. Je besser ein Sprachsignal verständlich ist, desto grösser ist also sein AI.

Tabelle 1:

| Frequenzbänder (in Hertz) für die Berechnung des Articulation Index (AI). | | | |
|---|---|---|---|
| Nummer i | Grenzen | Mittenfrequenz | Frequenzkomponenten ui - oi |
| 1 | 200-330 | 270 | 7-10 |
| 2 | 330-430 | 380 | 11-13 |
| 3 | 430-560 | 490 | 14-17 |
| 4 | 560-700 | 630 | 18-22 |
| 5 | 700-840 | 770 | 23-26 |
| 6 | 840-1000 | 920 | 27-31 |
| 7 | 1000-1150 | 1070 | 32-36 |
| 8 | 1150-1310 | 1230 | 37-41 |
| 9 | 1310-1480 | 1400 | 42-47 |
| 10 | 1480-1660 | 1570 | 48-53 |
| 11 | 1660-1830 | 1740 | 54-58 |
| 12 | 1830-2020 | 1920 | 59-64 |
| 13 | 2020-2240 | 2130 | 65-71 |
| 14 | 2240-2500 | 2370 | 72-79 |
| 15 | 2500-2820 | 2660 | 80-90 |
| 16 | 2820-3200 | 3000 | 91-102 |
| 17 | 3200-3650 | 3400 | 103-116 |
| 18 | 3650-4250 | 3950 | 117-127 |
| 19 | 4250-5050 | 4650 | |
| 20 | 5050-6100 | 5600 | |

Falls z.B. mit 8000 Hz abgetastet wird, reicht das Frequenzspektrum des Sprachsignals nur bis 4000 Hz. Für die Berechnung des AI's werden deshalb nur die ersten 18 Frequenzbänder in Betracht gezogen. Ausserdem muss das letzte Frequenzband gegen oben auf 4000 Hz begrenzt werden. Der AI lässt sich also wie folgt zusammenfassen:

$$AI[k] = \begin{cases} \dfrac{1}{18} \cdot \displaystyle\sum_{i=1}^{18} \dfrac{\min(SNR_i[k],30)}{30} & \text{falls beide Spektren vorhanden,} \\ 0 & \text{sonst.} \end{cases} \qquad (18)$$

Wie erwähnt, braucht es für die Berechnung eines Spektrums mindestens vier aufeinander folgende Rahmen, welche sich alle im Zustand "Rauschen" oder im Zustand "Sprache" befinden. Das neue Spektrum wird mit Hilfe einer Fouriertransformation über 256 Abtastwerte berechnet und mit den vorherigen Spektren exponentiell geglättet. Das geglättete Rauschspektrum $\vec{N}^{(g)}_{spec}[k]$ berechnet sich wie folgt:

$$\vec{N}^{(g)}_{spec}[k] = \begin{cases} \vec{N}_{spec}[k] & \text{falls erstes } \vec{N}_{spec}[k], \\ (1 - \lambda_{Nspec}[k]) \cdot \vec{N}_{spec}[k] + \lambda_{Nspec}[k] \cdot \vec{N}^{(g)}_{spec}[k-1] & \text{falls neues } \vec{N}_{spec}[k] \text{ vorhanden,} \\ w_{Nspec} \cdot \vec{N}^{(g)}_{spec}[k-1] & \text{sonst.} \end{cases} \qquad (19)$$

Es ist dabei zu beachten, dass $\vec{N}^{(g)}_{spec}[k]$ ein Vektor der Länge 256 ist und $\vec{N}_{spec}[k]$ dem neuen, aktuellen ungeglätteten Rauschspektrum entspricht.

Der adaptive Vergessensfaktor $\lambda_{Nspec}[k]$ lässt sich ähnlich berechnen wie der Vergessensfaktor des SNR's ($\lambda_{SNR}[k]$, d.h.:

$$\lambda_{Nspec}[k] = \min\left( \lambda_{Nspec,\min} + \lambda_{Nspec,diff} \cdot \left( \frac{\tau_{Nspec}[k]}{T_{Nspec}} \right)^{e}, \lambda_{Nspec,\max} \right), \qquad (20)$$

wobei z.B. $\lambda_{Nspec,\min} = 0.05$, $\lambda_{Nspec,\max} = 0.9$, $e = 5$ und $T_{Nspec} = 20$. $\tau_{Nspec,}[k]$ erhöht sich nach jedem neu berechneten Rauschspektrum um Eins. Wie in Gleichung 19 zu sehen ist, wird das Spektrum bei Nichtberechnung mit einem konstanten Faktor $w_{Nspec}$ multipliziert. Die Idee ist dabei folgende: wird das Rauschspektrum während einer gewissen Zeit nicht berechnet, so kann angenommen werden, dass das Rauschen stärker wurde und die Rauschschwelle noch zu tief liegt. Das Rauschspektrum wird deshalb bei Nichtberechnung mit dem konstanten Wachstumsfaktor $w_{Nspec}$ (z.B. 1.005) multipliziert und somit verstärkt.

Das geglättete Sprachspektrum $\vec{S}^{(g)}_{spec}[k]$ berechnet sich analog zum Rauschspektrum.

$$\vec{S}^{(g)}_{spec}[k] = \begin{cases} \vec{S}_{spec}[k] & \text{falls erstes } \vec{S}_{spec}[k], \\ (1 - \lambda_{Sspec}[k]) \cdot \vec{S}_{spec}[k] + \lambda_{Sspec}[k] \cdot \vec{S}^{(g)}_{spec}[k-1] & \text{falls neues } \vec{S}_{spec}[k] \text{ vorhanden}, \\ w_{Sspec} \cdot \vec{S}^{(g)}_{spec}[k-1] & \text{sonst.} \end{cases} \qquad (21)$$

Der Wachstumsfaktor $w_{Sspec}$ schwächt hier das Sprachspektrum bei Nichtberechnung ab. Der Wert von $w_{Sspec}$ beträgt z.B. 0.995. Der Vergessensfaktor $\lambda_{sspec}[k]$ ist gleich:

$$\lambda_{Sspec}[k] = \min\left( \lambda_{Sspec,\min} + \lambda_{Sspec,diff} \cdot \left( \frac{\tau_{Sspec}[k]}{T_{Sspec}} \right)^{f}, \lambda_{Sspec,\max} \right), \qquad (22)$$

wobei $\lambda_{Sspec,\min}$ und $\lambda_{Sspec,\max}$ z.B. gleich 0.05 bzw. 0.9 sind. Vorzugsweise hat der Exponent f den Wert 5 und $T_{Sspec}$ den Wert 20. Analog zu $\tau_{Nspec,}[k]$ erhöht sich $T_{Sspec,}[k]$ nach jeder Neuberechnung des Sprachspektrums $\vec{S}_{spec}[k]$ um Eins.

Damit kann nun der AI vollständig berechnet werden. Das SNR der einzelnen Frequenzbänder (SNR$_i$[k]) erhält man dadurch, dass einerseits die im jeweiligen Frequenzband enthaltenen Frequenzkomponenten des Rauschspektrums und andererseits die des Sprachspektrums miteinander addiert werden. Das Verhältnis der beiden Summen ergibt schliesslich das SNR des Frequenzbandes i.

$$SNR_i[k] = 10 \cdot \log_{10}\left( \frac{\sum_{j=u_i}^{o_i} S^{(g)}_{spec}[k](j)}{\sum_{j=u_i}^{o_i} N^{(g)}_{spec}[k](j)} \right) \qquad (23)$$

Die Konstanten $u_i$ und $o_i$ stehen für die unterste bzw. die oberste Frequenzkomponente des jeweiligen Frequenzbandes. Die Werte sind in der letzten Spalte der Tabelle 1 angegeben.

Der AI wird zum Schluss noch exponentiell geglättet. Bei der Glättung wird dabei zwischen steigendem und fallendem AI unterschieden. Bei letzterem ist der Vergessensfaktor $\gamma_{AI}$ konstant, während bei steigendem AI der Vergessensfaktor $\lambda_{AI}[k]$ von Rahmen zu Rahmen zunimmt. Der geglättete AI berechnet sich also wie folgt:

$$AI^{(g)}[k] = \begin{cases} (1 - \lambda_{AI}[k]) \cdot AI[k] + \lambda_{AI}[k] \cdot AI^{(g)}[k-1] & \text{falls } AI[k] > AI^{(g)}[k-1], \\ (1 - \gamma_{AI}) \cdot AI[k] + \gamma_{AI} \cdot AI^{(g)}[k-1] & \text{sonst.} \end{cases} \quad (24)$$

Den Vergessensfaktor $\lambda_{AI}[k]$ erhält man so:

$$\lambda_{AI}[k] = \min\left( \lambda_{AI,min} + \lambda_{AI,diff} \cdot \left( \frac{\tau_{AI}[k]}{T_{AI}} \right)^r , \lambda_{AI,max} \right),\quad (25)$$

wobei z.B. $\lambda_{AI,min} = 0.05$, $\lambda_{AI,max} = 0.95$, r = 5 und T = 20 sind. $\tau_{AI}[k]$ wird von Rahmen zu Rahmen um Eins erhöht. Der Wert des konstanten Vergessensfaktors $\gamma_{AI}$ sollte grösser sein als derjenige von $\lambda_{AI}[k]$. Der Grund liegt darin, dass der AI des Sprachsignals eher zu tief berechnet wird. $\gamma_{AI}$ ist deshalb gleich 0.98. Bei der Glättung des AI's ist zu beachten, dass am Schluss eines Signals, wenn AI[k] = 0 ist, auch AI$^{(g)}$[k] gleich Null gesetzt wird.

Der AI kann erst berechnet werden, wenn beide Spektren vorhanden sind. Der Zeitpunkt, ab dem der AI aussagekräftig ist, hängt deshalb davon ab, wann die beiden Spektren das erste Mal berechnet werden können. Eine Zeit in Millisekunden kann nicht angegeben werden. Sie liegt aber meist wenig über der des SNR's. Der AI hat den Wert Null, falls noch nicht beide Spektren vorhanden sind. Sobald der AI aber berechnet werden kann, ist er grösser als Null. Beim AI erreicht ein qualitativ gutes Sprachsignal einen Wert von 0.45-0.6, während ein qualitativ schlechtes nur einen Wert von 0.05-0.2 hat.

Da das SNR und der AI bei M = 64 nur alle 8 ms neu berechnet werden und am Anfang eines Signals nicht sofort zur Verfügung stehen, wird zur Bestimmung des Qualitätsindexes und zur schnelleren Signaldetektion noch zusätzlich eine Pegelmessung benötigt. Die Pegelmessung benötigt eine ähnliche Leistungsberechnung wie im Zusammenhang mit den Gleichungen 1 und 2 dargelegt. Da dort die Leistung aber bei M = 64 ebenfalls nur alle 8 ms berechnet wird, muss hier eine Leistungsberechnung angewandt werden, welche schneller einen neuen Wert liefert. Dabei wird immer nach jeweils $M_2$ Abtastwerten (hier $M_2$ = 8) die Leistung des Empfangssignals über die letzten M Abtastwerte gemittelt. Man kann somit viel schneller feststellen ob am Empfänger ein Signal vorhanden ist oder nicht. Die Rahmenlänge M sollte ohne Rest durch $M_2$ teilbar sein. Die neue Leistungsberechnung $p_2[v]$ lässt sich nun wie folgt schreiben:

$$p_2[v] = \frac{\sum_{i=1}^{M} x^2\left( \left( v - \frac{M}{M_2} \right) M_2 + i \right)}{M}.\quad (26)$$

Die gemittelte Leistung p[k] aus gemäss Gleichung 2 kann aus der neuen Leistungsberechnung p2[v] wie folgt gewonnen werden.

$$p[k] = p_2\left[ k * \frac{M}{M_2} \right]\quad (27)$$

Befindet sich die Leistung $p_2[v]$ über einer bestimmten Schwelle pegelmin, so steht fest, dass am Empfänger ein Signal empfangen wird, und die Pegelmessung ergibt den Wert Eins. Andernfalls wird kein Signal empfangen und der Wert Null angenommen. Die Pegelmessung hat also etwa die gleiche Bedeutung wie das Squelchsignal bestimmter Empfänger. Es ist somit durchaus denkbar, dass die Pegelmessung bei vorhandenem Squelch weggelassen und durch den Squelch ersetzt werden kann. Der Wert der Schwelle pegelmin liegt etwas über der off-Schwelle. Es ist aber durchaus denkbar, dass die beiden Schwellen gleich gesetzt werden. Zusammengefasst ergibt sich für die Pegelmessung pegel[v] also:

$$pegel[v] = \begin{cases} 1 & \text{falls } p_2[v] > pegelmin, \\ 0 & \text{sonst.} \end{cases} \qquad (28)$$

Das SNR und der AI werden zum Schluss mit der Pegelmessung in einem einzigen Qualitätsindex QI[v] zusammengefasst. Falls durch die Pegelmessung am Empfänger kein Signal detektiert wird, so nimmt der Qualitätsindex den Wert Null an. Bei einem erkanntem Signal ist der Qualitätsindex jedoch ungleich Null. In diesem Fall sollten das SNR und der AI etwa gleich viel zum Qualitätsindex beitragen. Sie werden deshalb beide mit einem bestimmten Faktor multipliziert und anschliessend addiert, d.h.:

$$QI[v] = \begin{cases} 0 & \text{falls } pegel[v] = 0, \\ 1 & \text{falls } pegel[v] = 1 \,\&\, SNR^{(g)}[k] = SNR_{\min} \,\&\, AI^{(g)}[k] = 0, \\ w_{SNR} \cdot SNR^{(g)}[k] \cdot 2 & \text{falls } pegel[v] = 1 \,\&\, SNR^{(g)}[k] > SNR_{\min} \,\&\, AI^{(g)}[k] = 0, \\ w_{SNR} \cdot SNR^{(g)}[k] + w_{AI} \cdot AI^{(g)}[k] & \text{sonst}. \end{cases} \qquad (29)$$

Dabei sind das $SNR^{(9)}[k]$ und der $AI^{(9)}[k]$ die zu diesem Zeitpunkt aktuellen Werte. Am Anfang eines Empfangssignals geht der Qualitätsindex also zuerst von Null auf Eins über. Sobald das SNR berechnet werden kann, wird der dritte Fall angenommen und das SNR doppelt gewichtet. Sind aber das Rausch- und das Sprachspektrum vorhanden, d.h. ist $AI^{(9)}[k] \neq 0$, tritt der normale Fall ein. Hier tragen das SNR und der AI etwa gleich viel zum Qualitätsindex bei. Die Gewichte $w_{SNR}$ und $w_{AI}$ werden deshalb vorzugsweise gleich 1 bzw. gleich 50 gewählt.

Da das SNR und der AI bei M = 64 alle 64 Abtastwerte neu berechnet werden, erhält man nur alle 8 ms einen neuen Qualitätsindex. Am Anfang und am Ende eines Empfangssignals kann der Qualitätsindex jedoch schneller von Null auf Eins oder von Eins auf Null wechseln, denn der Wert der Pegelmessung kann jede Millisekunde ändern.

Der Qualitätsindex, wird schliesslich zusammen mit dem Sprachsignal und einem Noiseflag zum Kontrollzentrum übertragen. Das Noiseflag zeigt an, ob sich das empfangene Sprachsignal im Zustand Rauschen befindet. Damit kann im Kontrollzentrum die Umschaltung von Signal zu Signal jeweils während dem Empfang von Rauschen ausgeführt werden.

Damit die oben beschriebenen Verfahrensschritte korrekt ausgeführt werden können, müssen zu Beginn verschiedene Parameter richtig eingestellt werden. Es sind dies die Parameter:

off: Die ON/OFF-Schwelle bestimmt, ob ein Signal am Eingang des Empfänger liegt oder nicht. Die Schwelle liegt etwas über der maximalen Signalleistung bei Nichtempfang.

sigmin : Der Wert sigmin dient dazu, dass am Anfang eines Empfangssignals der Einschaltstöreffekt nicht als Rauschen oder Sprache interpretiert wird. Sobald die Leistung des Signals grösser als sigmin ist, wird der Zustand 'Sprache' angenommen. Der Schwellwert sigmin liegt möglichst tief, aber immer über der Leistung des Einschaltstöreffekts.

ninit : Mit diesem Wert wird die Kurve l[k] und damit auch das Rauschen initialisiert. Der Wert von ninit liegt etwas unterhalb der grössten zu erwartenden Rauschleistung. Damit bleibt gewährleistet, dass das Rauschen genügend schnell richtig geschätzt werden kann.

pegelmin : Wie die ON/OFF-Schwelle dient pegelmin dazu sagen zu können, ob ein Signal empfangen wird oder nicht. Falls die Leistung über der Schwelle pegelmin zu liegen kommt, so nimmt die Pegelmessung den Wert Eins an und der Qualitätsindex wird grösser als Null. Der Wert der Schwelle pegelmin liegt etwas über der off-Schwelle. Es ist aber durchaus denkbar, dass die beiden Schwellen gleich gesetzt werden.

Durch eine Prozedur wird festgestellt, wie lange sich ein Signal schon im Zustand 0 oder 1 befindet. $\tau_{init}[k]$ zählt die Anzahl Rahmen. Falls $\tau_{init}[k]$ einen Wert initdelay überschreitet, so wird angenommen, dass das Pilotensignal zu Ende ist, und ein Flag wird gesetzt. Aufgrund dieses gesetzten Flags werden nun die verschiedenen Kurven und Variablen neu initialisiert. Mit der Schätzung bzw. Messung muss bei einem neuen Signal deshalb wieder von vorne begonnen werden. Bei einer Initialisierung werden folgende Kurven und Variablen neu eingestellt:

Signal-to-Noise Ratio:

s[k] = 0,
l[k] = ninit,
fh[k] = fh,min ,

b[k] = 0.6*init,
SNR[k] und SNR(g)[k] = SNRmin,
$\tau_{SNR}$ [k] = 0.

Articulation Index:

$\vec{N}_{spec}$[k] und $\vec{N}^{(g)}_{spec}$[k] = $\vec{0}$,
$\tau_{Nspec}$ [k] = 0,
$\vec{S}_{spec}$[k] und $\vec{S}^{(g)}_{spec}$[k] = $\vec{0}$,
$\tau_{Sspec}$ [k] = 0,
AI[k] und AI(g)[k] = 0,
$\tau_{AI}$ [k] = 0.

Wechselt das Signal nun in einen Zustand > 1, so wird das 'Initialisierungsflag' wieder auf Null zurückgesetzt und es kann, wie in diesem Kapitel beschrieben, mit der Berechnung der verschiedenen Kurven und Variablen fortgefahren werden. Falls die Zeit $\tau_{init}$[k], in welcher das Signal den Zustand 0 oder 1 aufweist, den Wert initdelay noch nicht überschritten hat, so darf angenommen werden, dass es sich immer noch um das gleiche Signal handelt. Das Signal hatte während dieser Zeit entweder eine sehr kleine Rauschleistung oder es war für einen kurzen Moment nicht zu empfangen. Damit die Kurven l[k] und b[k] und der Faktor $f_h$[k] im letzteren Fall durch die geringe Signalleistung nicht zu stark beeinträchtigt werden, nehmen diese vergangene Werte an. Z.B. liegen diese Werte um zehn Rahmen zurück und initdelay ist gleich 3 (Rahmenlängen).

Da für den AI Fouriertransformationen über 256 Abtastwerte ausgeführt werden müssen, ist der AI um einiges rechenintensiver als das SNR. Vergleiche haben zudem ergeben, dass der AI etwa das gleiche aussagt wie das SNR. Bei einer geringen, zur Verfügung stehenden Rechenleistung ist es also durchaus vorstellbar, dass der zu berechnende Qualitätsindex nur aus dem SNR und der Pegelmessung gewonnen wird. Falls aber genügend Rechenleistung vorhanden ist, sollten beide für die Berechnung des Qualitätsindexes berücksichtigt werden.

Die Auswahl des besten Signals erfolgt in der Zentrale Z, der die Daten von verschiedenen dezentralen Empfängem R1, R2, ... zugesandt werden. Anhand dieser Daten wird dann das Sprachsignal mit dem grössten Qualitätsindex ausgewählt, dekomprimiert und zum Operator durchgeschaltet. Bei der Lösung dieses Problems müssen jedoch verschiedene Punkte berücksichtigt werden:

Die Signale können aufgrund der verschieden langen Übertragungsstrecken Laufzeitunterschiede von bis zu 30 ms aufweisen. Dem Kontrollzentrum stehen deshalb am Anfang eines Pilotensignals nicht alle Qualitätsindizes zum gleichen Zeitpunkt zur Verfügung. Aufgrund der unterschiedlichen Laufzeiten kann ein Wechsel von einem Empfangssignal auf das andere zu einem hörbaren Knacksen führen. Damit die Qualität des Pilotensignals nicht künstlich verschlechtert wird, sollte deshalb nur begrenzt zwischen den verschiedenen Empfangssignalen gewechselt werden. Ein momentan ausgewähltes Empfangssignal kann hingegen von einem Zeitpunkt auf den anderen verloren gehen. In diesem Fall sollte sofort, ohne Verzögerung, auf ein anderes Signal umgeschaltet werden.

Im Kontrollzentrum wird zuerst alle M2 Abtastwerte der grösste Qualitätsindex gesucht. Die Nummer und der Wert des jeweiligen Empfängers mit dem grössten Qualitätsindex werden schliesslich den Variablen $qi_{ind}$ [v] und $qi_{max}$ [v] zugewiesen. D.h.:

$$qi_{max}[v] = \max(QI_1[v],\ QI_2[v],......,QI_m[v])\qquad(30)$$

und

$$qi_{ind}[v] = \begin{cases} 0 & \text{falls für alle } i: QI_i[v] = 0, \\ j & \text{sonst,} \end{cases}\qquad(31)$$

wobei $QI_j$[v] = $qi_{max}$[v]. Die Variable j entspricht dabei also der Nummer des 'besten' Empfängers (j∈{1,2,...,m}). Am Anfang eines Pilotensignals wird dem Operator dasjenige Signal durchgeschaltet, bei welchem der Qualitätsindex zuerst ungleich Null ist, d.h. die Pegelmessung bzw. der Squelch einen Empfang detektiert. Falls zwei Empfangssignale gleichzeitig zur Verfügung stehen, wird einfach das Signal mit dem höheren Qualitätsindex genommen. Die Variable Best Signal Selection BSS[v] erhält deshalb am Anfang eines Signals einfach den Wert der Variablen $qi_{ind}$[v].

$$BSS[v] = \begin{cases} 0 & \text{falls alle } QI_i[v] = 0 \text{ (d. h. falls kein Signal vorhanden)}, \\ qi_{ind}[v] & \text{am Anfang eines Signals}, \\ qi_{ind}[v] & \text{beim Verlust des selektierten Signals (schneller Wechsel)} \\ qi_{ind}[v] bedingt & \text{Auftreten eines "besseren Signals" (langsamer Wechsel)}. \end{cases} \quad (32)$$

Beim Auftreten eines qualitativ besseren Signals erfolgt die Umschaltung unter gewissen Bedingungen und allenfalls notwendigen Verzögerungen (deshalb ist in Zeile 4 von Gleichung 32 keine eindeutige Angabe enthalten). Es gibt grundsätzlich zwei Fälle, bei welchen auf ein anderes Signal und damit auf einen anderen Empfänger umgeschaltet wird.

Im ersten Fall (Zeile 3 von Gleichung 32) muss bei einem plötzlichen Verschwinden des ausgewählten Sprachsignals sofort und ohne Verzögerung auf das Sprachsignal mit dem momentan höchsten Qualitätsindex umgeschaltet werden. D.h. falls $QI_{BSS[v-1]}[v] = 0$ ist, wird $BSS[v]$ sofort gleich $qi_{ind}[v]$ gesetzt und somit auf das zur Zeit qualitativ beste Signal umgeschaltet. Da ein solcher Signalwechsel aber nicht unbedingt in einer Sprachpause vor sich geht, kann er als leises Knacken hörbar sein. Je nach Ort des Wechsels und je nach Laufzeitunterschied zwischen den beiden Sprachsignalen ist dieses Knacken lauter oder leiser. Die verwendeten Variablen flag[v], $\tau_{BSS,i}[v]$ und diff[v], die nachstehend (siehe Gleichungen 33, 34 und 35) definiert sind, werden nach dem Wechsel wieder initialisiert. Damit am Schluss einer Pilotendurchsage aufgrund der unterschiedlichen Laufzeiten nicht dauernd zwischen den verschiedenen Signalen umgeschaltet wird, wurde noch eine Mindestzeit T5 eingebaut, welche zwischen zwei 'schnellen' Wechseln überschritten werden muss. Die Zeit zwischen zwei 'schnellen' Signalwechseln wird mit Hilfe der Variable $\tau_{quick}[v]$ gemessen. Die Zeit T5 ist z.B. gleich 100 ms. Da der Wechsel sehr schnell und ohne Verzögerung ausgeführt wird, wird dies als 'schneller' Wechsel bezeichnet. Bei einem plötzlichen Verschwinden des ausgewählten Sprachsignals muss sofort und ohne Verzögerung auf das Sprachsignal mit dem momentan höchsten Qualitätsindex gewechselt werden.

Der zweite Fall (Zeile 4 von Gleichung 32) tritt ein, wenn das ausgewählte Sprachsignal nicht mehr den relativ höchsten Qualitätsindex aufweist. Ein sofortiger Signalwechsel ist in diesem Fall nicht notwendig. Es sollte deshalb erst nach einer gewissen Zeit auf ein qualitativ besseres Sprachsignal umgeschaltet werden. Der Wechsel kann zeitlich so erfolgen, dass möglichst wenig davon zu hören ist. Im folgenden wird der soeben beschriebene Signalwechsel der 'langsame' Wechsel genannt. Beim 'langsamen' Wechsel, wird fortwährend geschaut ob ein anderes Signal einen Qualitätsindex $Qi_i[v]$ hat, welcher grösser als derjenige des ausgewählten Signals $QI_{BSS[v]}[v]$ ist. Falls ja, wird die Differenz zwischen den beiden Qualitätsindizes $diff_i[v]$ berechnet.

$$diff_i[v] = \begin{cases} 0 & \text{falls } QI_i[v] \le QI_{BSS[v]}[v], \\ QI_i[v] - QI_{BSS[v]}[v] & \text{falls } diff_i[v-1] = 0 \ \& \ QI_i[v] > QI_{BSS[v]}[v], \\ (1 - \gamma_{diff}) \cdot (QI_i[v] - QI_{BSS[v]}[v]) + \gamma_{diff} \cdot diff_i[v-1] & \text{sonst}. \end{cases} \quad (33)$$

Die Zeit, während der $Qi_i[v]$ grösser ist als $QI_{BSS[v]}[v]$ wird mit Hilfe der Variable $\tau_{BSS,i}[v]$ gemessen:

$$\tau_{BSS,i}[v] = \begin{cases} 0 & \text{falls } QI_i[v] \le QI_{BSS[v]}[v] \text{ oder ein Wechsel stattfand}, \\ \tau_{BSS,i}[v-1] + 1 & \text{sonst}. \end{cases} \quad (34)$$

Jedesmal, wenn $QI[v] > QI_{BSS[v]}[v]$ ist und kein Signalwechsel stattfindet, wird also $T_{BSS,i}[v]$ um Eins erhöht. Diese Erhöhung entspricht, bei M2 = 8, einer Millisekunde. Der Vergessensfaktor $\gamma_{diff}$ hat z.B. den Wert 0.99. Da zwischen den verschiedenen Empfangssignalen Laufzeitunterschiede auftreten können, kann ein Wechsel zwischen zwei Signalen die Verständlichkeit des Sprachsignals stark beeinträchtigen. Es ist deshalb sinnvoll, wenn nicht allzu oft zwischen den Signalen gewechselt wird. Die Häufigkeit dieser Signalwechsel lässt sich über verschiedene Parameter einstellen. Es sind dies Zeiten, über die ein anderer Qualitätsindex grösser sein sollte und Schwellwerte, welche die Qualitätsindex-Verbesserung für einen Wechsel mindestens erreichen muss. Ist ein Qualitätsindex bereits während T1 Millisekunden besser als derjenige des ausgewählten Signals, so sollte bei genügend grosser Differenz der beiden Indizes (> D1) auf das qualitativ bessere Signal umgeschaltet werden. Da vielleicht ein anderes Empfangssignal i, bei welchem $\tau_{BSS,i}[v] < T1$ ist, einen noch grösseren Qualitätsindex aufweist, sollten vor dem Wechsel alle Signale genauer betrachtet werden. Damit nun aber nicht ein Signal i genommen wird, bei welchem der Qualitätsindex infolge eines Schätzungsfehlers nur kurzfristig sehr hoch ist, sollte $\tau_{BSS,i}[v] >= T2$ sein. Falls ein Signal j eine sehr grosse Qualitätsindex-Differenz (> D2) aufweist, so muss für einen Wechsel nicht darauf gewartet werden bis ein Signal $\tau_{BSS,i}[v] >= T1$ erfüllt. In diesem Fall kann der Signalwechsel bereits erfolgen, wenn $\tau_{BSS,i}[v] >= T3$ gilt. Ein Signalwechsel darf also erst dann stattfinden, wenn für ein beliebiges Empfangssignal i entweder $T_{BSS,i}[v] >= T1$ ist oder wenn $diff_i[v] > D2$ und $T_{BSS,i}[v] >= T3$ sind. Ist eine dieser beiden Bedingungen erfüllt, so wird ein Flag gesetzt:

$$flag[v] = \begin{cases} 1 & \text{falls } (\tau_{BSS,i}[v] \geq T_1) \text{ oder } (\tau_{BSS,i}[v] \geq T_3 \text{ und } diff_i[v] > D_2), \\ 0 & \text{sonst.} \end{cases} \qquad (35)$$

Für die Zeiten T1, T2 und T3 gilt übrigens: T1 > T2 und T1 > T3. Z.B. ist T1 = 500 ms, T2 = 300 ms und T3 = 300 ms. Die Schwellwerte D1 und D2 sind z.B. gleich 5 bzw. 15, d.h. D2 > D1. Bei gesetztem Flag flag[v] wird nun zuerst aus den Signalen i, welche entweder eine der beiden obigen Bedingungen oder aber $\tau_{BSS,i}[v] >= T2$ erfüllen, dasjenige mit der grössten Qualitätsindex-Differenz $diff_i[v]$ gesucht. Ist diese Differenz grösser als der Schwellwert D1, so darf auf das qualitativ bessere Signal (mit dem grössten $diff_i[v]$) gewechselt und BSS[v] der Index des neuen Signals zugewiesen werden. Andernfalls muss noch so lange mit dem Wechsel gewartet werden, bis der Schwellwert D1 von einem Signal überschritten wird. Die Best Signal Selection BBS[v] behält dabei die Nummer des alten Empfangssignals. Aufgrund der Laufzeitunterschiede zwischen den verschiedenen Empfangssignalen, kann ein Signalwechsel während einer Sprachphase durch ein Knacken hörbar sein. Dieses Knacken kann die Verständlichkeit des Sprachsignals sehr beeinträchtigen. Da mit dem Wechsel ohne Probleme noch ein paar Millisekunden gewartet werden kann, ist es sinnvoll erst in Sprachpausen zu wechseln. Mit Hilfe der mit übertragenen Noiseflags kann festgestellt werden, wann sich die beiden Signale in einer Sprachpause befinden. Damit nun aber nicht sofort am Ende einer Sprachphase bzw. am Anfang einer Sprachpause umgeschaltet wird, sollte der Wechsel noch ein paar Millisekunden hinausgezögert werden. Aus diesem Grund wird eine neue Variable $\tau_{noise}[v]$ eingeführt, welche die Zeit misst, während der sich die beiden Signale im Zustand 'Rauschen' befinden:

$$\tau_{noise}[v] = \begin{cases} \tau_{noise}[v-1] + 1 & \text{falls beide Noiseflags gesetzt,} \\ 0 & \text{sonst.} \end{cases} \qquad (36)$$

Falls $\tau_{noise}[v] >= T4$ ist, darf nun endlich auf das qualitativ bessere Empfangssignal gewechselt werden. Der Variable BSS[v] wird die Nummer des neuen, qualitativ besten Empfangssignals zugewiesen. Bei einem Wechsel werden zudem die Variablen flag[v], $\tau_{BSS,i}[v]$ und $diff_i[v]$ auf Null zurückgesetzt bzw. initialisiert. Die Zeit T4 wird z.B. gleich 5 ms gesetzt. Damit wird nun bei einem 'langsamen' Wechsel wirklich in einer Sprachpause von einem Signal auf das andere umgeschaltet. Ein solcher Signalwechsel ist fast nur am leiser werdenden Hintergrundgeräusch zu erkennen. Die Variablen flag[v], $\tau_{BSS,i}[v]$ und $diff_i[v]$ werden nach dem Wechsel wieder initialisiert.

Am Anfang eines Signals wird, wie in Gleichung (32) zu sehen ist, das Signal gewählt, welches als erstes einen Qualitätsindex ungleich 0 hat. Es ist nun möglich, dass das ausgewählte Signal einen Einschaltstöreffekt aufweist. In diesem Fall ist der Qualitätsindex am Anfang sehr klein. Liegt nun am Eingang des Kontrollzentrums ein Signal ohne bzw. mit einem kürzeren Einschaltstöreffekt vor, so kann frühestens nach der Zeit T3 auf das, zu Beginn qualitativ bessere Signal, umgeschaltet werden. Damit wird am Anfang eines Pilotensignals eventuell ein Teil des Sprachsignals abgeschnitten. Um dies zu verhindern, werden deshalb noch zwei zusätzliche Schwellen eingeführt. Es sind dies D3 und D4, wobei D3 < D4. Ist also der Wert des Qualitätsindexes $QI_{BSS[v]}[v]$ kleiner als D3, so wird nach einem Quali-tätsindex $QI_i[v]$ umgeschaut, welcher grösser als D4 ist. Sobald diese Bedingung für ein Qualitätsindex erfüllt ist, so wird sofort auf das dazugehörige Empfangssignal umgeschaltet. Wie bei den anderen Wechseln müssen auch hier die verschiedenen Variablen initialisiert werden. Z.B. sind die beiden Schwellen D3 und D4 gleich 2 bzw. gleich 5.

Die Qualität eines Sprachsignals kann mit Hilfe des beschriebenen Verfahrens präzise bestimmt werden. Das Qualitätsmass ist innerhalb von 200 ms bereits recht aussagekräftig. Selbst sehr kleine, kaum hörbare Qualitätsunterschiede können festgestellt werden. Jedem Empfangssignal kann nun also ein Qualitätsindex zugeordnet werden. Im Kontrollzentrum wird dann aufgrund dieser Qualitätsindizes das zur Zeit qualitativ beste Empfangssignal ausgewählt, dekomprimiert und zum Operator durchgeschaltet.

Das oben beschriebene Verfahren zur Bildung von Qualitätsindizes kann auch in der Zentrale Z durchgeführt werden. Wie oben beschrieben, lässt sich eine deutliche Erhöhung der Sprachverständlichkeit erzielen, indem der Zustand "Rauschen" festgestellt und, zumindest solange kein Signalverlust vorliegt, nur dann auf ein Signal mit einer höheren Qualität umgeschaltet wird, wenn der Zustand "Rauschen" beim momentan verwendeten und beim neu gewählten Signal vorliegt. Dieses (Umschalte-)Verfahren lässt sich auch anwenden, wenn der Qualitätsindex zentral z. B. mit einem vorbekannten Verfahren bestimmt wird. Z.B. kann für jedes empfangene Signal der Qualitätsindex und der Zustand "Rauschen" in der Zentrale Z festgestellt werden.

Bei den beschriebenen Übertragungssystemen erfolgt die Übertragung eines Signals von einer Nachrichtenquelle zu einer Nachrichtensenke über verschiedene Übertragungsstrecken bzw. -kanäle. Im Empfänger ist der Kanal, über den die qualitativ besten Signale übertragen werden, auszuwählen. Für die Anwendung des erfindungsgemässen Verfahrens ist es dabei unwesentlich, welches Übertragungsmedium für die Übertragungsstrecken verwendet wird. Z. B. kann die Übertragung per Funk oder über eine elektrische oder optische Leitung erfolgen.


**Patentansprüche**

1. Selektionsverfahren für Übertragungssysteme, bei denen die Übertragung eines Signals von einer Nachrichtenquelle zu einer Nachrichtensenke über verschiedene Übertragungskanäle erfolgt, wobei das Signal von der Nachrichtenquelle über mehrere Verbindungsleitungen und/oder per Funk über geographisch voneinander getrennte Antennen (A1, A2, ...) zu mehreren Empfängem (R1, R2, ...) gelangt und von dort zu einer Zentrale (Z) übertragen wird, durch die das qualitativ beste Signale ausgewählt und zu einem Operator durchgeschaltet wird, **dadurch gekennzeichnet**, dass in den Empfängern (R1, R2, ...) ein Qualitätsindex gebildet wird, der zusammen mit dem dazu korrespondierenden Signal zur Zentrale (Z) übertragen wird, wonach in der Zentrale (Z) das Signal mit dem höchsten Qualitätsindex selektiert und durchgeschaltet wird.

2. Verfahren nach Anspruch 1, **dadurch gekennzeichnet**, dass in den Empfängern (R1, R2, ...) die Signalleistung p[k] und anhand dessen die Sprachleistung s[k] sowie die Rauschleistung n[k] und somit das Verhältnis von Sprach- zu Rauschleistung SNR [k] bestimmt wird, das gegebenenfalls geglättet als Mass für die Qualität des zugehörigen Signals verwendet wird.

3. Verfahren nach Anspruch 2, **dadurch gekennzeichnet**, dass die Sprachleistung s[k] derart berechnet wird, dass deren Verlauf zumindest annähernd eine Enveloppe der Signalleistung p[k] bildet.

4. Verfahren nach Anspruch 2 oder 3, **dadurch gekennzeichnet**, dass in Abhängigkeit der Signalleistung p[k] eine Kurve l[k] berechnet wird, die, gegebenenenfalls multipliziert mit einem konstanten oder variablen Faktor (const; $f_q[k]$), die Rauschleistung n[k] bildet (n[k] = l[k], n[k] = const * l[k], n[k] = $f_q$[k]*l[k]), wobei die Kurve l[k] nach unten den Minimalwerten der Signalleistung p[k] angenähert und nach oben zwischen zwei Minimalwerten der Signalleistung p[k] nur beschränkt vergrössert wird.

5. Verfahren nach Anspruch 4, **dadurch gekennzeichnet**, dass die Kurve l[k] die untere Grenze der Rauschleistung bildet, dass in Abhängigkeit der Signalleistung p[k] eine weitere Kurve h[k] berechnet wird, die die obere Grenze der Rauschleistung bildet, dass die zur Berechnung des SNR verwendete Rauschleistung n[k] als Mittelwert der Kurven l[k] und h[k] gewählt wird, und dass die Kurve h[k] durch Multiplikation der Werte der Kurve l[k] mit einem vorzugsweise variablen Faktor $f_h$[k] gebildet wird.

6. Verfahren nach einem der Ansprüche 1 -5, **dadurch gekennzeichnet**, dass in bezug auf den Verlauf der Signalleistung p[k] festgestellt wird, ob der Zustand "Rauschen oder stimmlose Sprache", der Zustand "Sprache" oder der weitere Zustand "undefiniert" vorliegt, dass dazu eine Rauschschwelle $t_n$[k] und eine Sprachschwelle $t_s$[k] vorgesehen werden, dass die Rauschschwelle $t_n$[k] um einen vorzugsweise konstanten Faktor fn über der oberen Grenze h[k] der Rauschleistung liegt und dass die Sprachschwelle $t_s$[k] um einen vorzugsweise variablen Faktor fs[k] über der Rauschschwelle $t_n$[k] liegt, der proportional zum ermittelten Verhältnis von Sprach- zu Rauschleistung SNR [k] geändert wird.

7. Verfahren nach einem der Ansprüche 2 - 6, **dadurch gekennzeichnet,** dass der Articulation Index berechnet und bei der Bestimmung des Qualitätsindexes vorzugsweise gleich gewichtet verwendet wird wie das SNR.

8. Verfahren nach Anspruch 7, **dadurch gekennzeichnet**, dass Rahmen mit x Abtastwerten vorgesehen sind, dass für jeweils die letzten y Rahmen, für die der Zustand "Rauschen" bzw. "Sprache" festgestellt wurde, mittels Fouriertransformationen die Rauschspektren bzw. die Sprachspektren für ausgewählte Frequenzbänder berechnet werden und dass durch Addition der Frequenzkomponenten und einen Vergleich der derart gebildeten Summen ein Signal- zu Rauschverhältnis berechnet wird, bei dem Frequenzbänder, die für die Sprachverständlichkeit eine grössere Bedeutung haben, höher gewichtet sind.

**9.** Verfahren nach Anspruch 8, **dadurch gekennzeichnet**, dass nach y Rahmen, für die der Zustand "Rauschen" bzw. "Sprache" festgestellt wurde, zumindest ein weiterer Rahmen, für den der Zustand "undefiniert" gemeldet wurde, zur Berechnung der Rauschspektren bzw. der Sprachspektren verwendet wird.

**10.** Verfahren nach einem der Ansprüche 1 - 9, **dadurch gekennzeichnet**, dass in der Zentrale (Z) anhand der empfangenen Qualitätsindizes festgestellt wird, welches Signal die höchste Qualität aufweist, dass zu Empfangsbeginn oder nach Signalverlust sofort auf das Signal mit der höchsten Qualität geschaltet wird, dass anschliessend die Differenz zwischen den Qualitätsindizes der eintreffenden Signale festgestellt und gegebenenfalls nach einer Verzögerung auf ein Signal mit einer höheren Qualität umgeschaltet wird, wobei die gewählte Verzögerung kürzer oder gleich Null sein kann, sofern die Qualitätsdifferenz ein vorgesehenes Mass überschreitet.

**11.** Verfahren nach einem der Ansprüche 6 - 10, **dadurch gekennzeichnet**, dass der Zustand "Rauschen" in den Empfängern (R1, R2, ...) festgestellt und zur Zentrale (Z) gemeldet wird und dass in der Zentrale (Z), zumindest solange kein Signalverlust vorliegt, nur dann auf ein Signal mit einer höheren Qualität umgeschaltet wird, wenn der Zustand "Rauschen" beim momentan verwendeten und beim neu gewählten Signal vorliegt.

**12.** Verfahren nach einem der Ansprüche 1 - 11, **dadurch gekennzeichnet**, dass die Sprachsignale in den Empfängern (R1, R2, ...) komprimiert und in der Zentrale (Z) dekomprimiert werden.

**13.** Übertragungssystem zur Durchführung des Verfahrens nach Anspruch 1, bei dem Signale über verschiedene Übertragungskanäle von wenigstens einer Nachrichtenquelle zu einer Nachrichtensenke übertragen werden, wobei das Signal von der Nachrichtenquelle über mehrere Verbindungsleitungen und/oder per Funk über geographisch voneinander getrennte Antennen (A1, A2, ...) zu mehreren Empfängern (R1, R2, ...) gelangt und von dort zu einer Zentrale (Z) übertragbar ist, durch die das qualitativ beste Signal auswählbar und zu einem Operator durchschaltbar ist, **dadurch gekennzeichnet**, dass in den Empfängern (R1, R2, ...) ein Analog-/Digital-Wandler (DA) vorgesehen ist, der die empfangenen Signale digitalisiert und einem Signalprozessor (DSP) zuführt, welcher den zugehörigen Qualitätsindex berechnet und diesen zusammen mit dem Signal über eine Sendestufe (TX) sowie eine Leitung (L1; ...; Lp) oder per Funk an eine Zentrale (Z) übermittelt, in der das Signal mit dem höchsten Qualitätsindex ausgewählt und zum Operator durchgeschaltet wird.

**14.** Übertragungssystem nach Anspruch 9, **dadurch gekennzeichnet**, dass in den Empfängern (R1, R2, ...) Zustände feststellbar sind, in denen anstelle von Sprache nur Rauschen auftritt, dass diese Zustände zur Zentrale (Z) übertragbar sind, die, zumindest solange kein Signalverlust vorliegt, nur dann auf ein Signal mit einer höheren Qualität umschaltet, wenn der Zustand "Rauschen" beim momentan verwendeten und beim neu gewählten Signal vorliegt.

**Fig. 1**

**Fig. 2**

**Fig. 3**

0: off
1: on
2: Rauschen oder
   stimmlose Sprache
3: Sprache
4: undefiniert

Fig. 4

Sprachsignal (two664,in4)

**Fig. 5**

Signal-, Sprach- und Rauschleistung

**Fig. 6**

Signalleistung p[k] mit den Kurven l[k], h[k] und b[k]

**Fig. 7**

Signalleistung p[k], l[k], n[k] und h[k]

**Fig. 8**

Sprachsignale (two664,in1−in4)

**Fig. 9**

Signal-to-Noise Ratio (two664,in1-in4)

**Fig. 10**

Signalleistung, Rausch- und Sprachschwelle

**Fig. 11**

Zustandsverlauf

**Fig. 12**

Articulation Index (two664,in1–in4)

**Fig. 13**

Qualitaetsindizes (two664,in1–in4)

**Fig. 14**

Best Signal Selection (two664,in1–in4)

Europäisches
Patentamt

Nummer der Anmeldung

EP 98 81 0468

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP 0 036 037 A (BOSCH GMBH ROBERT) 23. September 1981 * Seite 3, Zeile 2 - Zeile 24 * * Seite 4, Zeile 17 - Zeile 27 * * Seite 5, Zeile 26 - Zeile 32 * --- | 1,13 | H04B7/08 H04L1/06 G10L7/02 |
| A | US 4 627 045 A (OLSON GENE H ET AL) 2. Dezember 1986 * Spalte 3, Zeile 44 - Spalte 4, Zeile 13 * * Spalte 5, Zeile 20 - Zeile 65 * * Spalte 6, Zeile 23 - Zeile 42 * * Anspruch 1 * --- | 1 | |
| D,A | EP 0 676 906 A (SIEMENS AG ALBIS) 11. Oktober 1995 * Seite 5, Zeile 19 - Zeile 32 * * Seite 5, Zeile 52 - Seite 6, Zeile 9 * --- | 1,7 | |
| D,A | J.R. DELLER ET AL.: DISCRETE-TIME PROCESSING OF SPEECH SIGNALS,1993, Seiten 580-587, XP002052577 NEW YORK * Seite 582, Zeile 20 - Seite 584, Zeile 22 * --- | 7 | |
| D,A | LYNCH J F ET AL: "SPEECH/SILENCE SEGMENTATION FOR REAL-TIME CODING VIA RULE BASED ADAPTIVE ENDPOINT DETECTION" INTERNATIONAL CONFERENCE ON ACOUSTICS, SPEECH & SIGNAL PROCESSING ICASSP, DALLAS, APRIL 6 - 9, 1987, Bd. 3, 6. April 1987, Seiten 1348-1351, XP002042632 INSTITUTE OF ELECTRICAL AND ELECTRONICS ENGINEERS * Seite 1349, rechte Spalte, Zeile 46 - Seite 1350, linke Spalte, Zeile 10 * ----- | 6 | |

RECHERCHIERTE SACHGEBIETE (Int.Cl.6)

H04B
G10L
H04L

Der vorliegende Recherchenbericht wurde für alle Patentansprüche erstellt

| Recherchenort | Abschlußdatum der Recherche | Prüfer |
|---|---|---|
| DEN HAAG | 9. September 1998 | Larcinese, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)